# EUROPEAN PATENT APPLICATION

(11) **EP 4 696 537 A1**
(43) Date of publication of application: **18.02.2026**
(21) Application number: 25195930.0
(22) Date of filing: 14.08.2025
(51) Int. Cl.: B60L 1/00, B60K 11/02, B60L 1/02, B60L 53/302, B60L 58/26, H01M 10/613, H01M 10/625, H01M 10/6567, H01M 10/6568

(54) **LIQUID COOLING DEVICE AND CHARGING DEVICE**

(30) Priority: 14.08.2024 CN 202411118733
(71) Applicant: Huawei Digital Power Technologies Co., Ltd., Shenzhen, Guangdong 518043 (CN)
(72) Inventor: SONG, Jinliang, Shenzhen, Guangdong, 518043 (CN); HU, Minggui, Shenzhen, Guangdong, 518043 (CN)
(74) Representative: Maiwald GmbH

(57) **Abstract**

This application provides a liquid cooling device and a charging device. The liquid cooling device includes a liquid storage tank, a liquid cooling unit, a liquid inlet connector, and a liquid outlet connector. The liquid cooling unit is configured to cool coolant in the liquid storage tank. The liquid storage tank includes a tank body and at least one partition plate, the at least one partition plate is configured to divide the tank body into an upper chamber and a lower chamber, and the upper chamber communicates with the lower chamber. The tank body is provided with a first liquid inlet and a first liquid outlet, the first liquid outlet is located in a part that is of the tank body and that corresponds to the upper chamber, the first liquid inlet is located in a part that is of the tank body and that corresponds to the lower chamber, the first liquid outlet is connected to a liquid inlet of the liquid cooling unit, and the first liquid inlet is connected to a liquid outlet of the liquid cooling unit. The tank body is further provided with a second liquid outlet, the second liquid outlet is located in the part that is of the tank body and that corresponds to the lower chamber, the second liquid outlet is connected to the liquid outlet connector, and the liquid inlet of the liquid cooling unit or the first liquid inlet is connected to the liquid inlet connector. This application can meet a heat dissipation requirement of an electric vehicle during high-power charging.

## Description

### TECHNICAL FIELD

This application relates to the field of thermal management, and in particular, to a liquid cooling device and a charging device.

### BACKGROUND

At present, with acceleration of progress of a carbon peaking and carbon neutrality strategy and continuously increasing popularity of electric vehicles, more cities start to pay attention to development of the electric vehicles. To meet a requirement of a current electric vehicle market, a battery capacity and charging power of the electric vehicle are increasingly high. However, in a high-power charging process, a battery of the electric vehicle severely generates heat. Currently, a conventional vehicle-mounted cooling system of the electric vehicle has an insufficient capability, and cannot meet a heat dissipation requirement of the electric vehicle during high-power charging.

### SUMMARY

This application provides a liquid cooling device and a charging device, so that when an electric vehicle is charged at high power, the liquid cooling device can deliver coolant to the electric vehicle, to meet a heat dissipation requirement of the electric vehicle during high-power charging.

According to a first aspect, this application provides a liquid cooling device. The liquid cooling device includes a liquid storage tank, a liquid cooling unit, a liquid inlet connector, and a liquid outlet connector, the liquid outlet connector is configured to connect to a liquid injection port of an electric vehicle, and the liquid inlet connector is configured to connect to a liquid return port of the electric vehicle. The liquid cooling unit is configured to cool coolant in the liquid storage tank. The liquid storage tank includes a tank body and at least one partition plate, the at least one partition plate is configured to divide the tank body into an upper chamber and a lower chamber, and the upper chamber communicates with the lower chamber. The tank body is provided with a first liquid inlet and a first liquid outlet, the first liquid outlet is located in a part that is of the tank body and that corresponds to the upper chamber, the first liquid inlet is located in a part that is of the tank body and that corresponds to the lower chamber, the first liquid outlet is connected to a liquid inlet of the liquid cooling unit, and the first liquid inlet is connected to a liquid outlet of the liquid cooling unit. The tank body is further provided with a second liquid outlet, the second liquid outlet is located in the part that is of the tank body and that corresponds to the lower chamber, the second liquid outlet is connected to the liquid outlet connector, and the liquid inlet of the liquid cooling unit or the first liquid inlet is connected to the liquid inlet connector.

In this embodiment of this application, the liquid outlet connector is connected to the liquid injection port of the electric vehicle, and the liquid inlet connector is connected to the liquid return port of the electric vehicle. When the electric vehicle is charged at high power, the liquid cooling device may deliver the coolant to the electric vehicle. The coolant may absorb heat generated in a charging process of the electric vehicle, to implement liquid cooling heat dissipation for the electric vehicle. In this way, a heat dissipation requirement of the electric vehicle during high-power charging can be met. This facilitates high-power charging of the electric vehicle, and improves user experience.

In addition, when the liquid cooling device includes a plurality of liquid inlet connectors and a plurality of liquid outlet connectors. One of the liquid outlet connectors is connected to the liquid injection port of the charging device, and one of the liquid inlet connectors is connected to the liquid return port of the charging device. When the charging device charges the electric vehicle at high power, the liquid cooling device may also deliver coolant to the charging device. The coolant may absorb heat generated by the charging device in the charging process, to implement liquid cooling heat dissipation of the charging device. This helps the charging device charge the electric vehicle at high power.

In addition, in this embodiment of this application, the partition plate is further designed. The partition plate divides the tank body into the upper chamber and the lower chamber. Generally, because coolant with a higher temperature flows upward, and coolant with a lower temperature flows downward, a temperature of the coolant in the upper chamber in the tank body is high, and a temperature of the coolant in the lower chamber is low. This is equivalent to isolating coolant with different temperatures in the tank body. In addition, because the second liquid outlet is located in the part that is of the tank body and that corresponds to the lower chamber, when the liquid cooling device delivers the coolant to the electric vehicle, a temperature of the coolant delivered to the electric vehicle through the second liquid outlet is lower. This can further improve efficiency of liquid cooling heat dissipation for the electric vehicle, to improve heat dissipation effect of the liquid cooling device on the electric vehicle.

In addition, the liquid storage tank further includes the first liquid outlet. The coolant flowing out through the first liquid outlet flows out from the liquid outlet of the liquid cooling unit after heat exchange with the liquid cooling unit, and flows into the liquid storage tank through the first liquid inlet. In this way, cooling circulation of the coolant in the liquid cooling device can be implemented, to reduce the temperature of the coolant in the liquid storage tank. Particularly, because the first liquid outlet is located in the part that is of the tank body and that corresponds to the upper chamber, the temperature of the coolant flowing out through the first liquid outlet is higher. This can improve heat exchange efficiency of the coolant, to improve heat dissipation effect.

With reference to the first aspect, in a possible design, the tank body includes a top plate, a bottom plate, and a plurality of side plates. The top plate and the bottom plate are disposed opposite to each other, and the plurality of side plates are located between the top plate and the bottom plate. The at least one partition plate includes one partition plate, the one partition plate is disposed between the top plate and the bottom plate, and there is a spacing between the one partition plate and at least one of the side plates; or the at least one partition plate includes a plurality of partition plates, the plurality of partition plates are disposed between the top plate and the bottom plate, the plurality of partition plates are spaced from each other in a first direction, and the first direction is perpendicular to a direction from the top plate to the bottom plate.

In this embodiment of this application, when the liquid storage tank includes one partition plate, the one partition plate is disposed between the top plate and the bottom plate, and there is a spacing between the one partition plate and the at least one of the side plates. The spacing may communicate two chambers, so that the coolant in the lower chamber flows into the upper chamber through the spacing, and the coolant in the upper chamber flows out through the first liquid outlet, passes through the liquid cooling unit, and flows into the lower chamber from the first liquid inlet. In this process, the liquid cooling unit may take away heat of the coolant flowing out from the first liquid outlet, and the cooled coolant returns to the liquid storage tank through the first liquid inlet. In this way, cooling circulation of the coolant in the liquid cooling device can be implemented, and it is ensured that the temperature of the coolant in the tank body is maintained within an appropriate temperature range. This helps implement liquid cooling heat dissipation for the electric vehicle.

When the liquid storage tank includes a plurality of partition plates, every two adjacent partition plates in the plurality of partition plates are spaced from each other. The plurality of partition plates are spaced from each other in the first direction, so that the coolant in the lower chamber flows into the upper chamber through the plurality of spacings, and the coolant in the upper chamber flows out through the first liquid outlet, passes through the liquid cooling unit, and flows into the lower chamber through the first liquid inlet. In this process, the liquid cooling unit may take away heat of the coolant flowing out from the first liquid outlet, and the cooled coolant returns to the liquid storage tank through the first liquid inlet. In this way, cooling circulation of the coolant in the liquid cooling device can be implemented, and it is ensured that the temperature of the coolant in the tank body is maintained within an appropriate temperature range. This helps implement liquid cooling heat dissipation for the electric vehicle.

In addition, in this embodiment of this application, the plurality of partition plates are designed to be spaced from each other in the first direction, so that a flow speed of the coolant flowing from the lower chamber to the upper chamber can be accelerated, to accelerate a cooling speed of the coolant in the tank body. This further facilitates liquid cooling heat dissipation for the electric vehicle.

With reference to the first aspect, in a possible design, when the at least one partition plate includes one partition plate, and there is a spacing between the one partition plate and one of the plurality of side plates, the first liquid outlet is located on a side plate opposite to the one side plate, and a distance from the first liquid outlet to the top plate is less than a distance from the first liquid outlet to the bottom plate.

When there is a spacing between the one partition plate and the side plate, in this embodiment of this application, the first liquid outlet is designed to be located on a side plate disposed opposite to the one side plate, so that heat exchange efficiency can be improved. Because a temperature of coolant at the side plate disposed opposite to the one side plate is higher than a temperature of coolant at a spacing, the coolant with a higher temperature in the tank body may preferentially flow out from the first liquid outlet, to improve heat exchange efficiency of the coolant, and improve heat dissipation effect of cooling circulation. In addition, the distance from the first liquid outlet to the top plate is less than the distance from the first liquid outlet to the bottom plate. Because the coolant with a higher temperature is located in the upper chamber, and the coolant with a lower temperature is located in the lower chamber, in this design, the coolant with a higher temperature in the tank body can perform heat exchange with the liquid cooling unit, to further improve heat exchange efficiency of the coolant, so as to ensure that cooling circulation of the coolant is performed normally, and improve heat dissipation effect of cooling circulation of the coolant. This helps the liquid cooling device dissipate heat for the electric vehicle, and helps the charging device normally charge the electric vehicle at high power.

With reference to the first aspect, in a possible design, when the at least one partition plate includes one partition plate, the one partition plate is disposed between the top plate and the bottom plate, and there are spacings between the partition plate and at least two of the plurality of side plates, or when the at least one partition plate includes a plurality of partition plates, the first liquid outlet is located in the top plate.

When there are a plurality of spacings between the at least one partition plate and the side plates, in this embodiment of this application, the first liquid outlet is designed to be located in the top plate, so that heat exchange efficiency can be improved. This is because, when there are a plurality of spacings between the at least one partition plate and the side plates, the coolant located in the lower chamber may flow into the upper chamber from the plurality of spacings. In this case, the temperature of the coolant located at the top plate is higher than the temperature of the coolant located at the spacing. In this way, the coolant with a higher temperature in the tank body can preferentially flow out from the first liquid outlet, to improve heat exchange efficiency of the coolant, and improve heat dissipation effect of cooling circulation. This helps the liquid cooling device dissipate heat for the electric vehicle, and helps the charging device normally charge the electric vehicle at high power.

With reference to the first aspect, in a possible design, the first liquid inlet and the second liquid outlet are located in the bottom plate.

In this embodiment of this application, the first liquid inlet is located in the bottom plate, so that the coolant after heat exchange with the liquid cooling unit flows into the lower chamber through the first liquid inlet, to ensure that cooling circulation of the coolant is normally performed, and improve heat dissipation effect of cooling circulation of the coolant. The second liquid outlet located in the bottom plate facilities delivering of the coolant in the tank body to the electric vehicle. This helps the liquid cooling device dissipate heat for the electric vehicle, and helps the charging device normally charge the electric vehicle at high power.

With reference to the first aspect, in a possible design, the liquid storage tank further includes at least one pressure relief valve, the pressure relief valve is located on the top plate, and the pressure relief valve is configured to discharge gas in the tank body.

In this embodiment of this application, when an atmospheric pressure value of the liquid storage tank is greater than a preset atmospheric pressure value, the gas in the liquid storage tank may be discharged to the outside through the pressure relief valve, so that the atmospheric pressure value of the liquid storage tank is in balance with the preset atmospheric pressure value. This can avoid the problem of leakage at the joint that may be caused by a large atmospheric pressure value of the liquid storage tank and a problem of explosion that may be caused by an excessively large atmospheric pressure value of the liquid storage tank, to improve reliability and safety of liquid cooling heat dissipation by the liquid cooling device for the electric vehicle or the liquid cooling device.

In addition, the pressure relief valve disposed on the top plate of the tank body helps release the gas in the liquid storage tank. This is because generally, the coolant with a higher temperature flows upward, and the coolant with a lower temperature flows downward. An increase of the atmospheric pressure value of the liquid storage tank is mostly related to an increase of the temperature of the coolant in the liquid storage tank. The pressure relief valve is disposed on the top plate of the tank body, so that the gas in the liquid storage tank can be discharged in time, to decrease the atmospheric pressure value of the liquid storage tank that is increased because the temperature of the coolant increases.

With reference to the first aspect, in a possible design, a liquid level sensor is disposed in the liquid storage tank, and the liquid level sensor is configured to detect a liquid level of the coolant contained in the tank body. The liquid cooling device is configured to: when the liquid level is less than a first preset height, generate information indicating to supplement coolant to the liquid storage tank; or when the liquid level is greater than a second preset height, generate information indicating to discharge coolant from the liquid storage tank. The second preset height is greater than the first preset height.

In this embodiment of this application, the liquid level sensor may detect the liquid level of the coolant accommodated in the tank body. The liquid cooling device may generate different information based on results of comparison between the liquid level and the first preset height and comparison between the liquid level and the second preset height. In this way, the liquid level of the coolant accommodated in the tank body meets a corresponding height requirement, to avoid a case in which a coolant requirement of the electric vehicle cannot be met due to insufficient coolant in the liquid storage tank, and avoid a case in which another component is damaged due to overflow of the coolant that may be caused by excessive coolant in the liquid storage tank, so as to improve reliability of providing the coolant for the electric vehicle by the liquid cooling device, and reduce a probability that the liquid cooling device damages the another component.

With reference to the first aspect, in a possible design, the liquid storage tank is further provided with a pH sensor, the pH sensor is located in the lower chamber, and the pH sensor is configured to detect a pH value of the coolant in the tank body.

In this embodiment of this application, compared with the temperature of the coolant in the lower chamber, the temperature of the coolant in the upper chamber is higher, and a pH value of the coolant with a higher temperature is likely to be decreased. In this application, the pH sensor is designed to be located in the lower chamber, so that accuracy of the pH value that is of the coolant and that is detected by the pH sensor can be improved. This helps the liquid cooling device determine the pH value of the coolant in the liquid storage tank, and further facilitates normal charging of the electric vehicle.

With reference to the first aspect, in a possible design, the liquid cooling device is configured to: when the pH value of the coolant in the tank body is less than a first pH threshold, generate information indicating to supplement coolant to the liquid storage tank; or when the pH value of the coolant in the tank body is less than a second pH threshold, generate information indicating to replace the coolant in the liquid storage tank. The second pH threshold is less than the first pH threshold.

In this embodiment of this application, the pH sensor may detect the pH value of the coolant in the tank body, and the liquid cooling device may generate different information based on results of comparison between the pH value and the first pH threshold and comparison between the pH value and the second pH threshold. In this way, the pH value of the coolant in the tank body meets a corresponding requirement, to avoid corrosion of the tank body or the electric vehicle caused by an excessively low pH value of the coolant in the liquid storage tank, and prolong service lives of the liquid cooling device and the electric vehicle.

With reference to the first aspect, in a possible design, the liquid storage tank is provided with a temperature sensor, the temperature sensor is located at one of the spacings, and the temperature sensor is configured to detect the temperature of the coolant in the tank body.

In this embodiment of this application, the coolant in the lower chamber flows into the upper chamber through the spacing. Therefore, in this application, the temperature sensor is designed to be located at one of the spacings, so that accuracy of detecting the temperature of the coolant in the tank body by the temperature sensor can be improved.

With reference to the first aspect, in a possible design, the liquid storage tank is further provided with an electric heater, the electric heater is located in the lower chamber, and the electric heater is configured to heat the coolant in the tank body.

Generally, the temperature of the coolant in the upper chamber is higher than the temperature of the coolant in the lower chamber. In this application, the electric heater is designed to be located in the lower chamber. When the temperature of the coolant delivered by the liquid cooling device to the electric vehicle is low, the liquid cooling device may control the electric heater to run, to heat the coolant in the lower chamber, so that a temperature requirement of the electric vehicle on the coolant can be met, and heat dissipation for the electric vehicle can be implemented, to ensure normal charging of the electric vehicle.

With reference to the first aspect, in a possible design, the liquid cooling unit includes a compressor, a first heat exchanger, an expansion valve, and a second heat exchanger that are sequentially connected. The first heat exchanger includes a first refrigerant path and a first coolant path, and the second heat exchanger includes a second refrigerant path. The first refrigerant path is connected between the compressor and the expansion valve, and the first refrigerant path is configured to perform heat exchange with the coolant path. A liquid outlet of the first coolant path is connected to the first liquid inlet, and the liquid inlet of the first coolant path is connected to the first liquid outlet or the liquid inlet connector.

In this embodiment of this application, when the liquid cooling device dissipates heat through liquid cooling heat dissipation, the liquid cooling unit may dissipate, through liquid-liquid heat exchange, heat for the coolant flowing out of the first liquid outlet. Efficiency of dissipating heat for the coolant by the liquid cooling unit is high. This helps improve a cooling speed of the coolant in the liquid storage tank. In addition, the liquid cooling unit may dissipate, through liquid-liquid heat exchange, heat for the coolant flowing out of the electric vehicle. Efficiency of dissipating heat for the coolant by the liquid cooling unit is high. This helps further improve heat dissipation effect of the coolant for the electric vehicle, to meet an increasing heat dissipation requirement of the electric vehicle.

With reference to the first aspect, in a possible design, the liquid cooling unit further includes a third heat exchanger and a fan, an air vent of the fan faces the third heat exchanger and the second heat exchanger, a liquid inlet of the third heat exchanger is connected to the liquid inlet connector or the first liquid outlet, and a liquid outlet of the third heat exchanger is connected to the first liquid inlet.

In this embodiment of this application, when the liquid cooling device further includes a third heat exchanger and a fan, the liquid cooling device may implement heat dissipation for the coolant in different modes. When the liquid cooling device implements heat dissipation for the coolant in a natural heat dissipation mode, the compressor does not need to be started, and the compressor, the first heat exchanger, and the second heat exchanger are in a non-working state. In this way, power consumption can be reduced, and heat dissipation efficiency can be improved. When the liquid cooling device implements heat dissipation for the coolant in a mechanical cooling mode, a requirement for the outdoor ambient temperature is low. Even if the ambient temperature is high, heat dissipation for the coolant can be implemented, and reliability is high. In this application, a mode of heat dissipation for the coolant can be flexibly switched based on the outdoor ambient temperature, so that heat dissipation for the coolant can be implemented, power consumption can be reduced, heat dissipation efficiency can be improved, and reliability can be improved.

In addition, in the mechanical cooling mode, the coolant that absorbs heat flows into the liquid storage tank from the liquid inlet connector after one heat dissipation. In a process of cooling the coolant that absorbs heat, a loss is small, and heat dissipation efficiency is high.

With reference to the first aspect, in a possible design, the second heat exchanger further includes a second coolant path, and the second refrigerant path is configured to perform heat exchange with the second coolant path. The liquid cooling unit further includes a third heat exchanger, a fan, and two three-way valves, an air vent of the fan faces the third heat exchanger, a liquid outlet of the third heat exchanger is connected to a liquid inlet of the second coolant path, and a liquid inlet of the third heat exchanger is connected to a liquid outlet of the second coolant path. A first valve opening of one of the three-way valves is connected to the liquid inlet of the first coolant path, a second valve opening of the one of the three-way valves is connected to the liquid inlet of the third heat exchanger, and a third valve opening of the one of the three-way valves is connected to the liquid inlet connector. A first valve opening of the other of the three-way valves is connected to the liquid outlet of the third heat exchanger, a second valve opening of the other of the three-way valves is connected to the liquid inlet of the second coolant path, and a third valve opening of the other of the three-way valves is connected to the first liquid inlet.

In this embodiment of this application, when the liquid cooling device further includes a third heat exchanger and a fan, the liquid cooling device may implement heat dissipation for the coolant in different modes. When the liquid cooling device implements heat dissipation for the coolant in a natural heat dissipation mode, the compressor does not need to be started, and the compressor, the first heat exchanger, and the second heat exchanger are in a non-working state. In this way, power consumption can be reduced, and heat dissipation efficiency can be improved. When the liquid cooling device implements heat dissipation for the coolant in a mechanical cooling mode, a requirement for the outdoor ambient temperature is low. Even if the ambient temperature is high, heat dissipation for the coolant can be implemented, and reliability is high. In this application, a mode of heat dissipation for the coolant can be flexibly switched based on the outdoor ambient temperature, so that heat dissipation for the coolant can be implemented, power consumption can be reduced, heat dissipation efficiency can be improved, and reliability can be improved.

In addition, in view of this design, in the two heat dissipation modes, the second coolant path may be shared. This facilitates integration of the liquid cooling device, and facilitates a miniaturization design of the liquid cooling device.

In addition, in this design, the air vent of the fan faces only the third heat exchanger, so that wind resistance is small, and heat dissipation effect is better. In addition, in the mechanical cooling mode, after flowing in from the liquid inlet connector, the coolant that absorbs heat flows into the liquid storage tank after two heat exchanges. Therefore, in this design, a heat dissipation requirement for a plurality of heat exchangers is low, so that costs can be reduced.

With reference to the first aspect, in a possible design, the liquid cooling unit further includes two one-way valves and one pump. An inlet of one of the one-way valves is connected to an outlet of the first refrigerant path, an outlet of the one of the one-way valves is connected to an inlet of the second refrigerant path, an inlet of the other of the one-way valves is connected to an outlet of the second refrigerant path, and an outlet of the other of the one-way valves is connected to an inlet of the first refrigerant path. An inlet of the pump is connected to the outlet of the second refrigerant path, and an outlet of the pump is connected to the inlet of the first refrigerant path.

When the liquid cooling device further includes two one-way valves and one pump, the liquid cooling device may implement heat dissipation for the coolant in different modes. When the liquid cooling device implements heat dissipation for the coolant in the natural heat dissipation mode, the compressor does not need to be started. In this way, power consumption can be reduced, and heat dissipation efficiency can be improved. When the liquid cooling device implements heat dissipation for the coolant in the mechanical cooling mode, a requirement for the outdoor ambient temperature is low. Even if the ambient temperature is high, heat dissipation for the coolant can be implemented, and reliability is high. In this application, a mode of heat dissipation for the coolant can be flexibly switched based on the outdoor ambient temperature, so that heat dissipation for the coolant can be implemented, power consumption can be reduced, heat dissipation efficiency can be improved, and reliability can be improved.

In addition, designing two one-way valves can also avoid reverse flow of the heat exchange fluid. This helps implement cooling circulation of the first refrigerant path, helps implement normal heat dissipation for the electric vehicle, and helps ensure normal charging of the electric vehicle by the charging device.

With reference to the first aspect, in a possible design, the first heat exchanger and the second heat exchanger are arranged in the first direction, the tank body is located between the first heat exchanger and the second heat exchanger, a length of the tank body in the first direction is less than a length of the tank body in the second direction, and the second direction is perpendicular to the first direction; or the first heat exchanger and the second heat exchanger are arranged in the first direction, the tank body and the liquid cooling unit are arranged in the second direction, and a length of the tank body in the first direction is greater than a length of the tank body in the second direction.

In an implementation, in this embodiment of this application, the tank body is designed to be located between the first heat exchanger and the second heat exchanger, and the length of the tank body in the first direction is less than the length of the tank body in the second direction. This design can avoid a waste of internal space of the liquid cooling device, facilitate integration of the liquid cooling device, and facilitate miniaturization of the liquid cooling device.

In another implementation, in this embodiment of this application, the tank body and the liquid cooling unit are designed to be arranged in the second direction, and the length of the tank body in the first direction is greater than the length of the tank body in the second direction. This can avoid a waste of internal space of the liquid cooling device, facilitate integration of the liquid cooling device, and facilitate miniaturization of the liquid cooling device. In addition, in this design of this application, capacity expansion of the liquid cooling device can be further implemented. Because the tank body and the liquid cooling unit are arranged in the second direction, that is, the tank body and the liquid cooling unit are independent of each other. When capacity expansion of the liquid cooling device needs to be performed, only a size of the tank body needs to be increased. This is easy to implement. According to a second aspect, this application provides a charging device. The charging device includes a charging module, a charger, and the liquid cooling device according to any one of the first aspect or the designs of the first aspect. The charger is configured to output, to the electric vehicle, a current output by the charging module. The liquid cooling device is configured to: when the charging device charges the electric vehicle, perform heat exchange with the electric vehicle and at least one of the charging module or the charger.

For beneficial effect in the second aspect, refer to the beneficial effect in the first aspect. Details are not described herein again.

### BRIEF DESCRIPTION OF DRAWINGS

FIG. 1 is a diagram of a structure of a charging system according to an embodiment of this application;
FIG. 2 to FIG. 5 are diagrams of a liquid cooling device according to an embodiment of this application;
FIG. 6 and FIG. 7 are respectively cross-sectional views corresponding to FIG. 4 along an xz plane and a yz plane;
FIG. 8 and FIG. 9 are respectively cross-sectional views corresponding to FIG. 5 along an xz plane and a yz plane;
FIG. 10 is a diagram of a liquid cooling device according to an embodiment of this application;
FIG. 11 and FIG. 12 are respectively cross-sectional views corresponding to FIG. 10 along an xz plane and a yz plane;
FIG. 13 is a diagram of a liquid cooling device according to an embodiment of this application;
FIG. 14 is a cross-sectional view corresponding to FIG. 13 along an xz plane;
FIG. 15 is a diagram of a liquid cooling device according to an embodiment of this application;
FIG. 16 is a diagram of a pressure relief valve according to an embodiment of this application; and
FIG. 17 to FIG. 26 are diagrams of a liquid cooling device according to an embodiment of this application.

### DESCRIPTION OF EMBODIMENTS

The following describes the technical solutions in this application with reference to the accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

Prefix words "first", "second", and the like in embodiments of this application are merely intended to distinguish between different objects, and impose no limitation on positions, sequences, priorities, quantities, content, or the like of the described objects. In embodiments of this application, use of a prefix word, for example, an ordinal number, used to distinguish between the described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more than two.

With development of new energy vehicle technologies, many vehicle manufacturers gradually launch electric vehicles. Electric vehicles have become choices for many users because of energy saving, environmental protection, and mature technologies.

This application may be used in a system in which a power supply apparatus and a load charge each other through a power distribution matrix. Particularly, in a system including a charging pile and an electric vehicle, the charging pile may charge the electric vehicle by using electric energy that comes from a power grid, and the electric vehicle may also reversely output electric energy of the electric vehicle to the power grid.

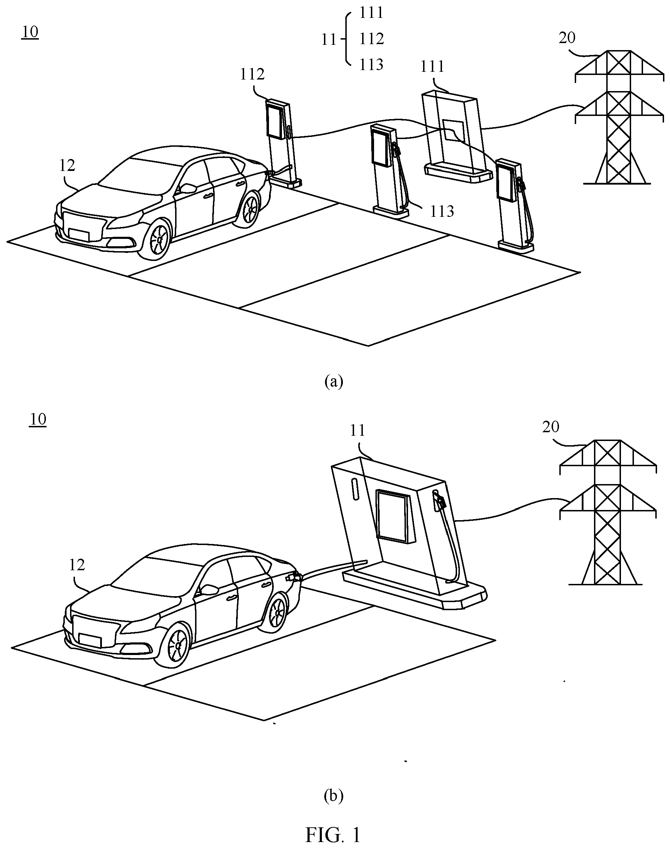

FIG. 1 is a diagram of an example structure of a charging system 10 according to an embodiment of this application.

With reference to (a) in FIG. 1 and (b) in FIG. 1, the charging system 10 may include a charging device 11 and an electric vehicle 12. The charging device 11 may be configured to receive an alternating current output by an external power grid 20, convert the alternating current into a stable direct current, and then transmit the stable direct current to the electric vehicle 12, to charge the electric vehicle 12. Alternatively, the electric vehicle 12 may reversely output electric energy to the external power grid 20.

In some embodiments, as shown in (a) in FIG. 1, the charging device 11 is a split charging pile. Specifically, the charging device 11 may include a charging power unit 111, at least one charging terminal 112, and at least one charger 113. The charging power unit 111 may be electrically connected to the at least one charging terminal 112. The at least one charging terminal 112 may be electrically connected to the at least one charger 113. During specific implementation, one charging terminal 112 may be electrically connected to one or more chargers 113.

The charging power unit 111 may include a plurality of power conversion apparatuses. The plurality of power conversion apparatuses may convert an alternating current that comes from the external power grid 20 into a stable direct current, and then transmit the stable direct current to the charging terminal 112. The plurality of power conversion apparatuses may include, for example, an alternating current-direct current (alternating current-direct current, AC-DC) conversion apparatus and a direct current-direct current (direct current-direct current, DC-DC) conversion apparatus. The charging terminal 112 transmits the stable direct current to the electric vehicle 12 through the charger 113, to charge the electric vehicle 12.

The charging terminal 112 may include a housing, a human-machine interaction interface, a charging control unit, a metering and billing unit, and the like, and is configured to perform information exchange, energy transmission, metering and billing, and the like with the electric vehicle 12.

The electric vehicle 12 may be a transportation vehicle driven by electric energy to run. The electric vehicle 12 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging device 11 is an integrated charging pile. Specifically, in the charging device 11, the human-machine interaction interface, the charging control unit, the metering and billing unit, and the like may be directly disposed in the charging power unit 111, so that the charging device 11 may include only the charging power unit 111 and at least one charger 113 electrically connected to the charging power unit 111, but does not include the charging terminal 112. A plurality of power conversion apparatuses in the charging power unit 111 may convert an alternating current that comes from the external power grid 20 into a stable direct current, and then directly transmit the stable direct current to the electric vehicle 12 through the charger 113.

At present, with acceleration of progress of a carbon peaking and carbon neutrality strategy and continuously increasing popularity of electric vehicles, more cities start to pay attention to development of the electric vehicles. To meet a requirement of a current electric vehicle market, a battery capacity and charging power of the electric vehicle are increasingly high. However, in a high-power charging process, a battery of the electric vehicle severely generates heat. Currently, a conventional vehicle-mounted cooling system of the electric vehicle has an insufficient capability, and cannot meet a heat dissipation requirement of the electric vehicle during high-power charging.

Therefore, this application provides a liquid cooling device, so that when an electric vehicle is charged at high power, the liquid cooling device can deliver coolant to the electric vehicle, to meet a heat dissipation requirement of the electric vehicle during high-power charging.

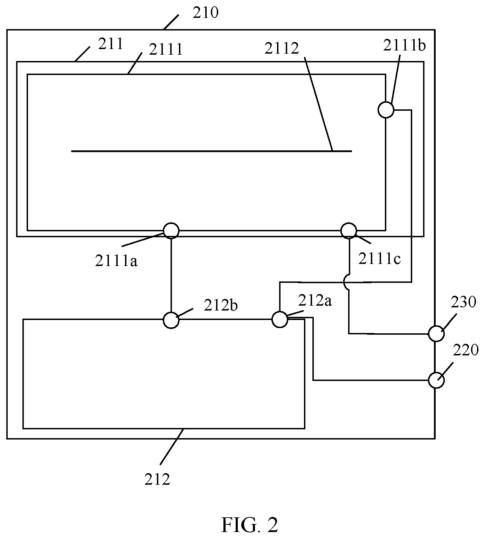

FIG. 2 is a diagram of a liquid cooling device 210 according to this application. The liquid cooling device 210 includes a liquid storage tank 211, a liquid cooling unit 212, a liquid inlet connector 220, and a liquid outlet connector 230. The liquid outlet connector 230 is configured to connect to a liquid injection port of an electric vehicle, and the liquid inlet connector 220 is configured to connect to a liquid return port of the electric vehicle.

In this application, specific disposition forms of the liquid outlet connector 230 and the liquid inlet connector 220 are not limited. For example, the liquid outlet connector 230 may be a quick-connect plug with a bidirectional cut-off function, to reduce risks of liquid leakage in processes of plugging the liquid outlet connector 230 into the electric vehicle and unplugging the liquid outlet connector 230 from the electric vehicle. Similarly, the liquid inlet connector 220 is also a quick-connect plug with a bidirectional cut-off function, to reduce risks of liquid leakage in processes of plugging the liquid inlet connector 220 into the electric vehicle and unplugging the liquid inlet connector 220 from the electric vehicle.

In addition, in this application, the liquid outlet connector 230 and the liquid inlet connector 220 may be two independent quick-connect plugs, to improve convenience of plugging and unplugging the two quick-connect plugs. Alternatively, the liquid outlet connector 230 and the liquid inlet connector 220 may be integrated to form an integrated structure, to implement simultaneous plugging or unplugging of the two quick-connect plugs. This helps reduce a quantity of plugging and unplugging times.

The liquid cooling unit 212 is configured to cool coolant in the liquid storage tank 211. The liquid storage tank 211 includes a tank body 2111 and at least one partition plate 2112. The at least one partition plate 2112 is configured to divide the tank body 2111 into an upper chamber and a lower chamber, and the upper chamber communicates with the lower chamber.

In this embodiment of this application, FIG. 2 shows one partition plate 2112. The partition plate 2112 divides the tank body 2111 into two chambers, for example, the upper chamber and the lower chamber shown in the figure.

In this embodiment of this application, the tank body 2111 is provided with a first liquid inlet 2111a and a first liquid outlet 2111b. The first liquid outlet 2111b is located in a part that is of the tank body and that corresponds to the upper chamber, the first liquid inlet 2111a is located in a part that is of the tank body and that corresponds to the lower chamber, the first liquid outlet 2111b is connected to a liquid inlet 212a of the liquid cooling unit 212, and the first liquid inlet 2111a is connected to a liquid outlet 212b of the liquid cooling unit 212.

Refer to FIG. 2. Because the first liquid outlet 2111b is located in the part that is of the tank body and that corresponds to the upper chamber, and the first liquid inlet 2111a is located in the part that is of the tank body and that corresponds to the lower chamber, coolant in the upper chamber flows into the liquid inlet 212a of the liquid cooling unit 212 through the first liquid outlet 2111b, and the coolant flows out of the liquid outlet 212b of the liquid cooling unit 212 after heat exchange with the liquid cooling unit 212, and flows into the lower chamber through the first liquid inlet 2111a. In this way, cooling circulation of the coolant in the liquid cooling device can be implemented, to reduce a temperature of the coolant in the liquid storage tank 211.

In the foregoing embodiment, a flow direction of the coolant in the liquid cooling device may be as follows: the liquid storage tank 211-the first liquid outlet 2111b- the liquid inlet 212a of the liquid cooling unit-the liquid outlet 212b of the liquid cooling unit-the first liquid inlet 2111a-the liquid storage tank 211, to implement the cooling circulation of the coolant in the liquid cooling device, reduce the temperature of the coolant in the liquid storage tank 211, so as to ensure that the temperature of the coolant in the liquid storage tank 211 is maintained within an appropriate temperature range.

In addition, the tank body is further provided with a second liquid outlet 2111c, the second liquid outlet 2111c is located in the part that is of the tank body and that corresponds to the lower chamber, the second liquid outlet 2111c is connected to the liquid outlet connector 230, and the liquid inlet 212a of the liquid cooling unit 212 or the first liquid inlet 2111a is connected to the liquid inlet connector 220 (the figure shows a case in which the liquid inlet 212a of the liquid cooling unit 212 is connected to the liquid inlet connector 220).

Generally, because coolant with a higher temperature flows upward, and coolant with a lower temperature flows downward, a temperature of the coolant in the upper chamber is higher than a temperature of coolant in the lower chamber. In addition, because the second liquid outlet 2111c is located in the t part that is of the tank body and that corresponds to the lower chamber, a temperature of coolant flowing out from the second liquid outlet 2111c is low. In an actual scenario, when a charging device charges the electric vehicle at high power, the second liquid outlet 2111c delivers coolant to the electric vehicle through the liquid outlet connector 230 connected to the second liquid outlet 2111c, and the coolant may absorb heat generated by a power battery in a charging process. Then, the coolant that absorbs the heat flows into the liquid cooling unit 212 through the liquid inlet connector 220 connected to the liquid return port of the electric vehicle, to bring the heat generated in the charging process of the electric vehicle into the liquid cooling unit 212, so as to implement heat dissipation for the electric vehicle.

Further, the liquid cooling unit 212 may cool, through heat exchange, coolant flowing out of the electric vehicle, and the cooled coolant flows into the liquid storage tank 211 through the liquid outlet 212b of the liquid cooling unit 212 and the first liquid inlet 2111a, so that cyclic heat dissipation is performed for the electric vehicle through the coolant in the liquid storage tank 211. A specific implementation in which the liquid cooling unit 212 dissipates, through heat exchange, heat of the coolant flowing out of the electric vehicle is described in detail below. Details are not described herein.

In the foregoing embodiment, a flow direction of the coolant in the liquid cooling device and the electric vehicle may be as follows: the liquid storage tank 211-the second liquid outlet 2111c-the liquid outlet connector 230-the liquid injection port of the electric vehicle-the liquid return port of the electric vehicle-the liquid inlet connector 220-the liquid inlet 212a of the liquid cooling unit-the liquid outlet 212b of the liquid cooling unit-the first liquid inlet 2111a-the liquid storage tank 211, to implement heat dissipation for the electric vehicle, and cool the electric vehicle, so as to ensure that the charging device normally charges the electric vehicle at high power.

It should be noted that, in some embodiments, when the liquid cooling device dissipates heat for some devices that generate a little heat, the coolant that absorbs heat may alternatively flow into the liquid storage tank 211 through the liquid inlet connector 220 connected to liquid return ports of the devices. For example, the liquid cooling device dissipates heat for a charger. The second liquid outlet 2111c delivers coolant to the charger through the liquid outlet connector 230 connected to the second liquid outlet 2111c. The coolant may absorb heat generated by the charger in a charging process. Then, the coolant that absorbs the heat flows into the liquid storage tank 211 through the liquid inlet connector 220 connected to a liquid return port of the charger, to bring a little heat generated by the charger into the liquid storage tank 211. Because the charger generates the little heat in the charging process, even if the coolant that absorbs the heat of the charger flows into the liquid storage tank 211, impact on an overall temperature of the coolant in the liquid storage tank 211 is small. To further ensure that the temperature of the coolant in the liquid storage tank 211 meets a corresponding requirement, for the coolant flowing into the liquid storage tank 211, the liquid cooling unit 212 may cool the coolant in the liquid storage tank 211 through heat exchange. Specifically, the coolant in the liquid storage tank 211 flows out through the first liquid outlet 2111b, and flows into the liquid cooling unit through the liquid inlet 212a of the liquid cooling unit 212. The liquid cooling unit 212 may cool the coolant, and the cooled coolant flows into the liquid storage tank 211 through the liquid outlet 212b of the liquid cooling unit 212 and the first liquid inlet 2111a, to cool the coolant in the liquid storage tank 211.

In the foregoing embodiment, a flow direction of the coolant in the liquid cooling device and the charger may be as follows: the liquid storage tank 211-the second liquid outlet 2111c-the liquid outlet connector 230-a liquid injection port of the charger-a liquid return port of the charger-the liquid inlet connector 220-the first liquid inlet 2111a-the first liquid outlet 2111b-the liquid inlet 212a of the liquid cooling unit-the liquid outlet 212b of the liquid cooling unit-the liquid storage tank 211, to implement heat dissipation for the charger, so as to cool the charger.

It should be further noted that, in some embodiments, the liquid cooling device may include a plurality of liquid inlet connectors and a plurality of liquid outlet connectors. One of the liquid outlet connectors is further configured to connect to a liquid injection port of the charging device, and one of the liquid inlet connectors is configured to connect to a liquid return port of the charging device. In this way, the liquid cooling device may also dissipate heat for the charging device, to cool the charging device. A specific heat dissipation process is similar to that in the foregoing descriptions. Details are not described herein again.

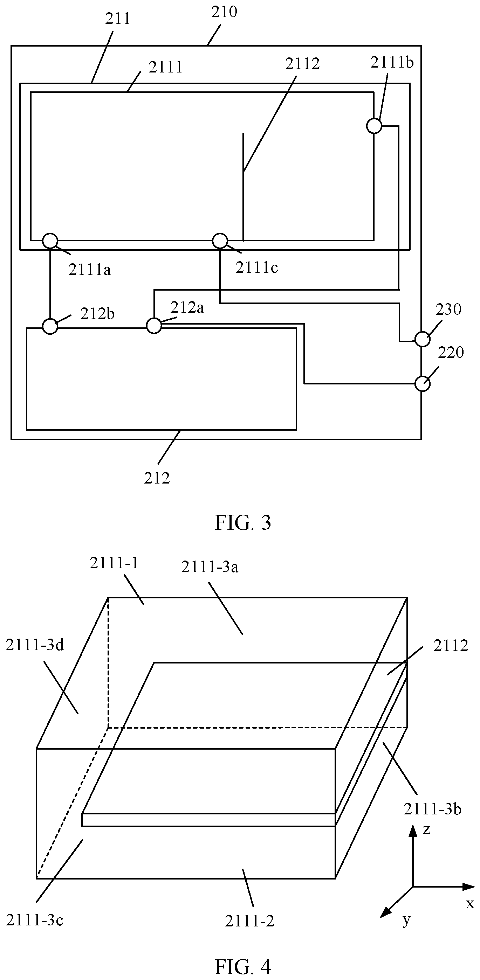

It should be understood that a position of the partition plate of the liquid storage tank 211 shown in FIG. 2 is merely an example. In this embodiment of this application, the partition plate of the liquid storage tank 211 may alternatively be vertically disposed, as shown in FIG. 3.

With reference to FIG. 2 and FIG. 3, a difference between the two designs lies in disposing of the partition plate. In FIG. 2, the partition plate 2112 is horizontally disposed, to divide the tank body 2111 into the upper chamber and the lower chamber. However, in FIG. 3, the partition plate 2112 is vertically disposed, to divide the tank body 2111 into a left chamber and a right chamber. Temperatures of coolant in the two chambers are different. FIG. 3 shows a case in which the temperature of the coolant in the left chamber is lower than the temperature of the coolant in the right chamber. A specific heat dissipation process is similar to the heat dissipation process in FIG. 2. Details are not described herein again.

In another implementation, it may alternatively be designed that the temperature of the coolant in the left chamber is higher than the temperature of the coolant in the right chamber. On a basis of this design, positions of the first liquid inlet 2111a, the first liquid outlet 2111b, and the second liquid outlet 2111c are also correspondingly adjusted. However, a specific heat dissipation process is similar to the heat dissipation process in FIG. 2. Details are not described again.

In this embodiment of this application, the liquid outlet connector is connected to the liquid injection port of the electric vehicle, and the liquid inlet connector is connected to the liquid return port of the electric vehicle. When the electric vehicle is charged at high power, the liquid cooling device may deliver the coolant to the electric vehicle. The coolant may absorb the heat generated in the charging process of the electric vehicle, to implement liquid cooling heat dissipation for the electric vehicle. In this way, a heat dissipation requirement of the electric vehicle during high-power charging can be met. This facilitates high-power charging of the electric vehicle, and improves user experience.

In addition, when the liquid cooling device includes the plurality of liquid inlet connectors and the plurality of liquid outlet connectors. The one of the liquid outlet connectors is connected to the liquid injection port of the charging device, and the one of the liquid inlet connectors is connected to the liquid return port of the charging device. When the charging device charges the electric vehicle at high power, the liquid cooling device may also deliver the coolant to the charging device. The coolant may absorb the heat generated by the charging device in the charging process, to implement liquid cooling heat dissipation of the charging device. This helps the charging device charge the electric vehicle at high power.

In addition, in this embodiment of this application, the partition plate is further designed. The partition plate divides the tank body into the upper chamber and the lower chamber. Generally, because coolant with a higher temperature flows upward, and coolant with a lower temperature flows downward, the temperature of the coolant in the upper chamber in the tank body 2111 is higher, and the temperature of the coolant in the lower chamber is lower. This is equivalent to isolating coolant with different temperatures in the tank body 2111. In addition, because the second liquid outlet 2111c is located in the part that is of the tank body and that corresponds to the lower chamber, when the liquid cooling device delivers the coolant to the electric vehicle, the temperature of the coolant delivered to the electric vehicle through the second liquid outlet 2111c is lower. This can further improve efficiency of liquid cooling heat dissipation for the electric vehicle, to improve heat dissipation effect of the liquid cooling device on the electric vehicle.

In addition, the liquid storage tank further includes the first liquid outlet 2111b. The coolant flowing out through the first liquid outlet 2111b flows out from the liquid outlet of the liquid cooling unit after heat exchange with the liquid cooling unit, and flows into the liquid storage tank through the first liquid inlet 2111a. In this way, cooling circulation of the coolant in the liquid cooling device can be implemented, to reduce the temperature of the coolant in the liquid storage tank. Particularly, because the first liquid outlet 2111b is located in the part that is of the tank body and that corresponds to the upper chamber, the temperature of the coolant flowing out through the first liquid outlet 2111b is higher. This can improve heat exchange efficiency of the coolant, to improve heat dissipation effect.

It is noted above that the at least one partition plate 2112 divides the tank body 2111 into the two chambers, and the at least one partition plate may include one or more partition plates. The following provides descriptions in cases.

### Case 1

In an embodiment, the tank body 2111 includes a top plate, a bottom plate, and a plurality of side plates. The top plate and the bottom plate are disposed opposite to each other, and the plurality of side plates are located between the top plate and the bottom plate. The at least one partition plate includes one partition plate 2112, the one partition plate 2112 is disposed between the top plate and the bottom plate, and there is a spacing between the one partition plate 2112 and at least one of the side plates.

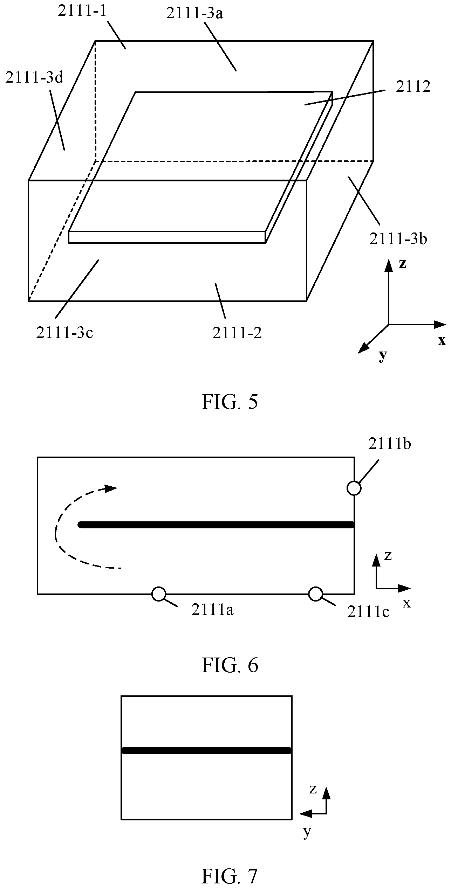

Refer to FIG. 4. It can be seen that the tank body 2111 includes a top plate 2111-1, a bottom plate 2111-2, and four side plates: 2111-3a, 2111-3b, 2111-3c, and 2111-3d, where there is a spacing between one partition plate 2112 and the side plate 2111-3d. Refer to FIG. 5. There are spacings between the one partition plate and the two side plates: 2111-3b and 2111-3d.

Refer to FIG. 4. The partition plate 2112 shown in the figure is used as an example. It can be seen that the partition plate 2112 is connected to both the two side plates: 2111-3a and 2111-3c of the tank body 2111, the partition plate 2112 is connected to the side plate 2111-3b of the tank body 2111, and there is a spacing between the partition plate 2112 and the side plate 2111-3d of the tank body 2111. In other words, in FIG. 4, there is a spacing between the partition plate 2112 and the side plate 2111-3d of the tank body 2111. In a diagram shown in FIG. 5, the partition plate 2112 is connected to both the two side plates: 2111-3a and 2111-3c of the tank body 2111, and there are spacings between the partition plate 2112 and the two side plates: 2111-3b and 2111-3d of the tank body 2111. In other words, in FIG. 5, there are spacings between the partition plate 2112 and the two side plates: 2111-3b and 2111-3d of the tank body 2111.

FIG. 6 and FIG. 7 are respectively cross-sectional views corresponding to FIG. 4 along an xz plane and a yz plane. Refer to FIG. 6. It can be clearly seen that there is a spacing between the partition plate 2112 and one of the side plates of the tank body 2111 in an x direction. Refer to FIG. 7. It can be clearly seen that the partition plate 2112 is connected to two of the side plates of the tank body 2111 in a y direction. With reference to FIG. 6 and FIG. 7, there is a spacing between the partition plate 2112 and the one of the side plates of the tank body 2111, so that the coolant in the lower chamber can flow into the upper chamber through the spacing.

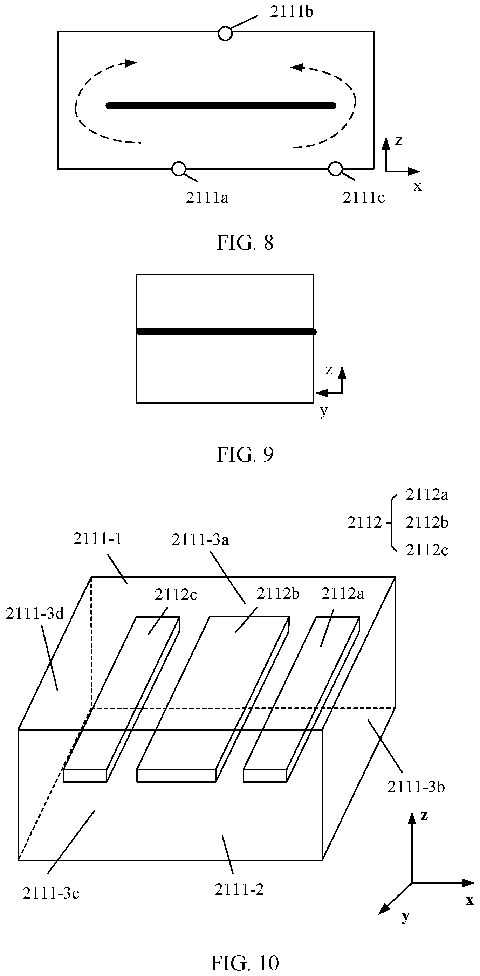

FIG. 8 and FIG. 9 are respectively cross-sectional views corresponding to FIG. 5 along an xz plane and a yz plane. Refer to FIG. 8. It can be clearly seen that there are spacings between the partition plate 2112 and two side plates of the tank body 2111 in an x direction. Refer to FIG. 9. It can be clearly seen that the partition plate 2112 is connected to two side plates of the tank body 2111 in a y direction. With reference to FIG. 8 and FIG. 9, there are spacings between the partition plate 2112 and two side plates of the tank body 2111 that are disposed opposite to each other, so that the coolant in the lower chamber may flow into the upper chamber through the two spacings.

In the foregoing FIG. 4 to FIG. 9, there are spacings between the partition plate 2112 and one or more side plates of the tank body 2111, that is, the partition plate is connected to at least one side plate of the tank body 2111. Specifically, the partition plate may be connected to the at least one side plate of the tank body 2111 through clamping or welding.

It should be understood that FIG. 4 to FIG. 9 show a case in which there are spacings between the partition plate and the one or more side plates of the tank body 2111. In some possible implementations, there is a spacing between the partition plate 2112 and each side plate of the tank body 2111, that is, the partition plate 2112 is not connected to each side plate of the tank body 2111. In this case, the partition plate may be fastened to an upper surface or a lower surface of the tank body, so that there is a spacing between the partition plate 2112 and each side plate of the tank body 2111.

In this embodiment of this application, when the liquid storage tank 211 includes one partition plate 2112, the partition plate 2112 is disposed between the top plate and the bottom plate, and there is a spacing between the partition plate 2112 and at least one side plate. The spacing may communicate two chambers, so that the coolant in the lower chamber flows into the upper chamber through the spacing, and the coolant in the upper chamber flows out through the first liquid outlet 2111b, passes through the liquid cooling unit 212, and flows into the lower chamber from the first liquid inlet 2111a. In this process, the liquid cooling unit 212 may take away heat of the coolant flowing out from the first liquid outlet 2111b, and the cooled coolant returns to the liquid storage tank 211 through the first liquid inlet 2111a. In this way, cooling circulation of the coolant in the liquid cooling device can be implemented, and it is ensured that the temperature of the coolant in the tank body is maintained within an appropriate temperature range. This helps implement liquid cooling heat dissipation for the electric vehicle.

### Case 2

In an embodiment, the at least one partition plate includes a plurality of partition plates, the plurality of partition plates are disposed between the top plate and the bottom plate, the plurality of partition plates are spaced from each other in a first direction, and the first direction is perpendicular to a direction from the top plate to the bottom plate.

Refer to FIG. 10. It can be seen that the tank body 2111 includes a top plate 2111-1, a bottom plate 2111-2, and four side plates: 2111-3a, 2111-3b, 2111-3c, and 2111-3d. In the figure, three partition plates are used as an example. The three partition plates are a partition plate 2112a, a partition plate 2112b, and a partition plate 2112c respectively. The three partition plates are spaced from each other in the first direction, and the first direction is perpendicular to the direction from the top plate to the bottom plate, that is, the first direction is an x direction shown in the figure.

In the diagram shown in FIG. 10, there are spacings between the plurality of partition plates 2112 and the two side plates: 2111-3b and 2111-3d of the tank body 2111, and the plurality of partition plates 2112 are connected to both the two side plates: 2111-3a and 2111-3c of the tank body 2111.

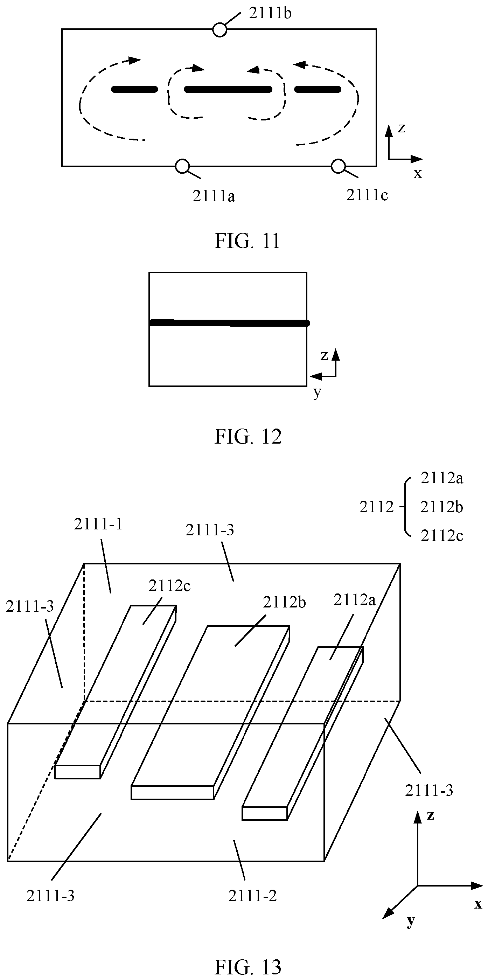

FIG. 11 and FIG. 12 are respectively cross-sectional views corresponding to FIG. 10 along an xz plane and a yz plane. Refer to FIG. 11. It can be clearly seen that the partition plate 2112a, the partition plate 2112b, and the partition plate 2112c are spaced from each other in the x direction, so that there is a spacing between the partition plate 2112 and the side plate of the tank body 2111 in an x direction. Refer to FIG. 12. It can be clearly seen that the partition plate 2112 is connected to the side plate of the tank body 2111 in a y direction. With reference to FIG. 11 and FIG. 12, there are spacings between the plurality of partition plates 2112 and the side plates of the tank body 2111, so that the coolant in the lower chamber may flow into the upper chamber through the plurality of spacings.

In this embodiment of this application, when the liquid storage tank 211 includes the plurality of partition plates, the plurality of partition plates are disposed between the top plate and the bottom plate, and the plurality of partition plates are spaced from each other in the first direction, so that the coolant in the lower chamber flows into the upper chamber through the plurality of spacings, and the coolant in the upper chamber flows out through the first liquid outlet 2111b, passes through the liquid cooling unit 212, and flows into the lower chamber through the first liquid inlet 2111a. In this process, the liquid cooling unit 212 may take away heat of the coolant flowing out from the first liquid outlet 2111b, and the cooled coolant returns to the liquid storage tank 211 through the first liquid inlet 2111a. In this way, cooling circulation of the coolant in the liquid cooling device can be implemented, and it is ensured that the temperature of the coolant in the tank body 2111 is maintained within an appropriate temperature range. This helps implement liquid cooling heat dissipation for the electric vehicle.

In addition, in this embodiment of this application, the plurality of partition plates are designed to be spaced from each other in the first direction, so that a flow speed of the coolant flowing from the lower chamber to the upper chamber can be accelerated, to accelerate a cooling speed of the coolant in the tank body 2111. This further facilitates liquid cooling heat dissipation for the electric vehicle.

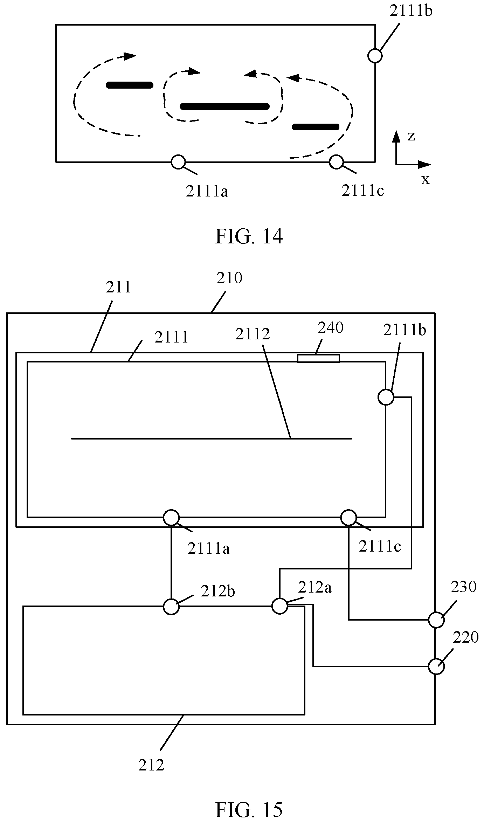

It should be noted that, when the at least one partition plate includes a plurality of partition plates, the plurality of partition plates may not be located on a same plane, as shown in FIG. 13. FIG. 14 is a cross-sectional view corresponding to FIG. 13 along an xz plane. Refer to FIG. 14. It can be clearly seen that the plurality of partition plates are not on the same plane. In addition, the plurality of partition plates are spaced from each other in an x direction, so that the coolant in the lower chamber may flow into the upper chamber through a plurality of spacings, and the liquid cooling device can still implement liquid cooling heat dissipation for the electric vehicle.

The following specifically describes a position of the first liquid outlet 2111b.

Still refer to FIG. 2. When the at least one partition plate includes one partition plate, and there is a spacing between the one partition plate 2112 and one of the plurality of side plates, the first liquid outlet 2111b is located on a side plate opposite to the one side plate, and a distance from the first liquid outlet 2111b to the top plate is less than a distance from the first liquid outlet 2111b to the bottom plate. An advantage of this design is that cooling circulation of the coolant is facilitated. This is because generally, the coolant with a higher temperature flows upward, and the coolant with a lower temperature flows downward. When the distance from the first liquid outlet 2111b to the top plate is less than the distance from the first liquid outlet 2111b to the bottom plate, that is, the first liquid outlet 2111b is located on one side plate close to the top plate, the coolant with a higher temperature flows out through the first liquid outlet 2111b, and flows into the tank body 2111 through the first liquid inlet 2111a after heat exchange with the liquid cooling unit 212. If the first liquid outlet 2111b is disposed on the bottom plate, and the temperature of the coolant flowing out from the first liquid outlet 2111b is low, the coolant flows into the tank body 2111 through the first liquid inlet 2111a after heat exchange with the liquid cooling unit. Although cooling of the coolant can be implemented, the coolant with a higher temperature in the tank body is not cooled, and overall effect is poor.

Therefore, in this application, the first liquid outlet 2111b is designed to be located on a side plate disposed opposite to one side plate, so that heat exchange efficiency can be improved. Because a temperature of coolant at the side plate disposed opposite to the one side plate is higher than a temperature of coolant at a spacing, the coolant with a higher temperature in the tank body 2111 may preferentially flow out from the first liquid outlet 2111b, to improve heat exchange efficiency of the coolant, and improve heat dissipation effect of cooling circulation. In addition, the distance from the first liquid outlet 2111b to the top plate is less than the distance from the first liquid outlet 2111b to the bottom plate. Because the coolant with a higher temperature is located in the upper chamber, and the coolant with a lower temperature is located in the lower chamber, in this design, the coolant with a higher temperature in the tank body can perform heat exchange with the liquid cooling unit, to further improve heat exchange efficiency of the coolant, so as to ensure that cooling circulation of the coolant is performed normally, and improve heat dissipation effect of cooling circulation of the coolant. This helps the liquid cooling device dissipate heat for the electric vehicle, and helps the charging device normally charge the electric vehicle at high power.

In an embodiment, when the at least one partition plate includes one partition plate, the one partition plate is disposed between the top plate and the bottom plate, and there are spacings between the partition plate and at least two of the plurality of side plates, or when the at least one partition plate includes a plurality of partition plates, the first liquid outlet 2111b is located in the top plate.

Refer to FIG. 8. When there are spacings between one partition plate 2112 and at least two of the plurality of side plates, the first liquid outlet 2111b is located in the top plate. An advantage of this design is that heat exchange efficiency can be improved. This is because, in this design, the coolant in the lower chamber may flow into the upper chamber through a plurality of spacings, and a temperature of coolant located at the top plate is higher than a temperature of coolant at the spacing. In this way, the coolant with a higher temperature in the tank body can preferentially flow out from the first liquid outlet, to improve heat exchange efficiency of the coolant, and improve heat dissipation effect of cooling circulation. If the first liquid outlet 2111b is designed on one of the at least one side plate, the coolant with a lower temperature in the tank body preferentially flows out from the first liquid outlet. As a result, heat exchange efficiency of the coolant is low. This is not conducive to overall cooling of the coolant in the tank body. Therefore, this design of this application can improve heat exchange efficiency of the coolant, and improve heat dissipation effect of cooling circulation. This facilities cooling of the coolant and improves heat dissipation effect of cooling circulation of the coolant, thereby facilitating heat dissipation for the electric vehicle, and helping the charging device normally charge the electric vehicle at high power.

Similarly, refer to FIG. 11. When the at least one partition plate includes a plurality of partition plates, the first liquid outlet 2111b is located in the top plate. An advantage of this design is that cooling circulation of the coolant is facilitated. A specific cause is similar to the foregoing descriptions, and is not described again.

In an embodiment, the first liquid inlet 2111a and the second liquid outlet 2111c are located in the bottom plate. The first liquid inlet 2111a is located in the bottom plate, so that the coolant after heat exchange with the liquid cooling unit flows into the lower chamber through the first liquid inlet 2111a, to ensure that cooling circulation of the coolant is normally performed, and improve heat dissipation effect of cooling circulation of the coolant. The second liquid outlet 2111c located in the bottom plate facilities delivering of the coolant in the tank body to the electric vehicle. This is because if the second liquid outlet 2111c is disposed on the side plate, a liquid level of the coolant accommodated in the tank body may be higher than the second liquid outlet. As a result, the coolant cannot flow out. This affects heat dissipation of the liquid cooling device for the electric vehicle. Therefore, the second liquid outlet 2111c located in the bottom plate facilities delivering of the coolant in the tank body to the electric vehicle. This helps the liquid cooling device dissipate heat for the electric vehicle, and helps the charging device normally charge the electric vehicle at high power.

In some cases, the coolant in the liquid storage tank 211 is affected by a high temperature, and consequently, an atmospheric pressure in the liquid storage tank 211 may increase. If a measure is not taken in time to reduce the atmospheric pressure in the liquid storage tank 211, a problem of leakage at a joint may occur. Seriously, the liquid storage tank may explode. As a result, reliability and safety are reduced.

Therefore, in an embodiment, as shown in FIG. 15, the liquid storage tank further includes at least one pressure relief valve 240, the pressure relief valve 240 is located on the top plate, and the pressure relief valve is configured to discharge gas in the tank body 2111.

In this embodiment of this application, when an atmospheric pressure value of the liquid storage tank 211 is greater than a preset atmospheric pressure value, the gas in the liquid storage tank 211 may be discharged to the outside through the pressure relief valve 240, so that the atmospheric pressure value of the liquid storage tank 211 is in balance with the preset atmospheric pressure value. This can avoid the problem of leakage at the joint that may be caused by a large atmospheric pressure value of the liquid storage tank 211 and a problem of explosion that may be caused by an excessively large atmospheric pressure value of the liquid storage tank 211, to improve reliability and safety of liquid cooling heat dissipation by the liquid cooling device for the electric vehicle or the liquid cooling device.

In addition, the pressure relief valve 240 disposed on the top plate of the tank body helps release the gas in the liquid storage tank 211. This is because generally, the coolant with a higher temperature flows upward, and the coolant with a lower temperature flows downward. An increase of the atmospheric pressure value of the liquid storage tank 211 is mostly related to an increase of the temperature of the coolant in the liquid storage tank 211. The pressure relief valve 240 is disposed on the top plate of the tank body, so that the gas in the liquid storage tank 211 can be discharged in time, to decrease the atmospheric pressure value of the liquid storage tank 211 that is increased because the temperature of the coolant increases.

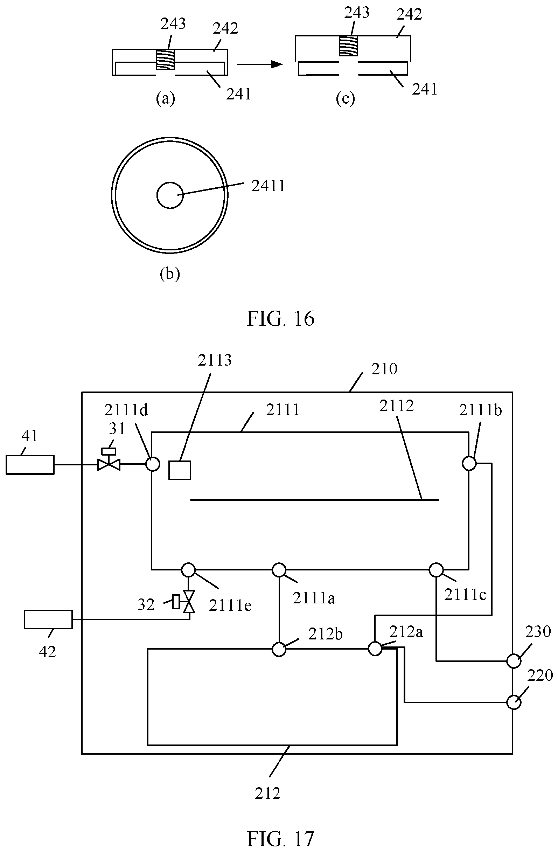

(a) in FIG. 16 is a tangent view of the pressure relief valve before an elastic member moves in a direction away from a valve body. (b) in FIG. 16 is a bottom view of the pressure relief valve. (c) in FIG. 16 is a tangent view of the pressure relief valve after the elastic member moves in the direction away from the valve body.

Refer to (a) in FIG. 16. In this embodiment of this application, the pressure relief valve 240 includes a valve body 241, a valve cover 242, and an elastic member 243. The valve cover 242 covers the valve body 241, the valve body 241 is connected to the valve cover 242 through the elastic member 243, the valve body 241 includes a valve opening 2411, and the valve opening 2411 communicates with either of the two chambers.

In this embodiment of this application, the liquid storage tank 211 corresponds to the preset atmospheric pressure value. When the atmospheric pressure value of the liquid storage tank 211 is equal to the preset atmospheric pressure value, a state of the pressure relief valve 240 is shown in (a) in FIG. 16, that is, there is no spacing between the valve body 241 and the valve cover 242. In this case, it may be considered that the atmospheric pressure value of the liquid storage tank 211 is in balance with an external atmospheric pressure, so that the gas in the liquid storage tank 211 is not discharged to the outside, and does not enter the liquid storage tank 211. When the atmospheric pressure value of the liquid storage tank 211 is greater than the preset atmospheric pressure value, the elastic member 243 moves in a direction away from the valve body 241, there is a spacing between the valve body 241 and the valve cover 242, the valve opening 2411 communicates with the outside, and a state of the pressure relief valve 240 is shown in (c) in FIG. 16. In this case, the gas in the liquid storage tank 211 may be discharged to the outside through the valve opening 2411, and in a process of discharging the gas in the liquid storage tank 211 to the outside, the elastic member 243 moves in a direction close to the valve body 241, until the atmospheric pressure value of the liquid storage tank 211 reaches the preset atmospheric pressure value, the valve body 241 re-covers the valve cover 242, and the pressure relief valve 240 returns to the state shown in (a) in FIG. 16.

In this embodiment of this application, because the valve opening 2411 included in the valve body of the pressure relief valve 240 communicates with either of the two chambers, when the atmospheric pressure value of the liquid storage tank 211 is greater than the preset atmospheric pressure value, the elastic member 243 moves in the direction away from the valve body 241, there is a spacing between the valve body 241 and the valve cover 242, and the valve opening 2411 communicates with the outside. In this case, the gas in the liquid storage tank 211 can be discharged to the outside through the valve opening 2411, so that the atmospheric pressure value of the liquid storage tank 211 is in balance with the preset atmospheric pressure value. In this way, the problem of leakage at the joint that may be caused by the large atmospheric pressure value of the liquid storage tank 211 and the problem of explosion that may be caused by the excessively large atmospheric pressure value of the liquid storage tank 211 can be avoided, to improve reliability and safety of liquid cooling heat dissipation by the liquid cooling device for the electric vehicle or the liquid cooling device.

In an embodiment, as shown in FIG. 17, a liquid level sensor 2113 is disposed in the liquid storage tank 211, and the liquid level sensor 2113 is configured to detect the liquid level of the coolant accommodated in the tank body 2111.

The liquid cooling device is configured to: when the liquid level is less than a first preset height, generate information indicating to supplement coolant to the liquid storage tank 211; or when the liquid level is greater than a second preset height, generate information indicating to discharge coolant from the liquid storage tank 211. The second preset height is greater than the first preset height.

In this embodiment of this application, at least a part of the liquid level sensor 2113 is located in the coolant, that is, the liquid level sensor 2113 may float on a liquid surface of the coolant or be suspended in the coolant. For example, the liquid level sensor 2113 may be a float liquid level meter, a resistive liquid level sensor, or the like. The float liquid level meter floats on the liquid surface of the coolant, and the resistive liquid level sensor is suspended in the coolant.

In this embodiment of this application, for example, the first preset height is h1 and the second preset height is h2. When the liquid level sensor 2113 detects that the liquid level of the coolant accommodated in the tank body 2111 is h0, and it is assumed that h0<h1, it indicates that there is too little coolant in the liquid storage tank 211 at this time. When the liquid cooling device needs to deliver the coolant to the electric vehicle, because there is too little coolant in the liquid storage tank 211, a coolant requirement of the electric vehicle cannot be met. Therefore, in this case, the liquid cooling device may generate the information indicating to supplement coolant to the liquid storage tank 211, and supplement the coolant to the liquid storage tank 211.

It is assumed that h0>h2. It indicates that there is too much coolant in the liquid storage tank 211 at this time. If redundant coolant is not discharged in time, the coolant in the liquid storage tank 211 may overflow, and the overflowed coolant flows to another component, which may cause damage to the another component. Therefore, in this case, the liquid cooling device may generate the information indicating to discharge coolant from the liquid storage tank 211, and discharge at least a part of the coolant in the liquid storage tank 211 in time.

In an embodiment, as shown in FIG. 17, the tank body 2111 is further provided with a liquid refill opening 2111d and a liquid discharge opening 2111e. The liquid refill opening 2111d is configured to connect to a liquid refill device 41 through a liquid refill valve 31, the liquid discharge opening 2111e is configured to connect to a liquid discharge device 42 through a liquid discharge valve 32, the liquid refill opening 2111d is configured to deliver coolant in the liquid refill device 41 to the liquid storage tank 211, and the liquid discharge opening 2111e is configured to discharge coolant in the liquid storage tank 211 to the liquid discharge device 42.

In this embodiment of this application, when the liquid cooling device generates the information indicating to supplement coolant to the liquid storage tank 211, the liquid cooling device may automatically control the liquid refill valve 31 to connect a path between the liquid refill device 41 and the liquid storage tank 211, so that the liquid refill device 41 supplements the coolant to the liquid storage tank 211 through the liquid refill opening 2111d. Alternatively, when the liquid cooling device generates the information indicating to supplement coolant to the liquid storage tank 211, the liquid cooling device may notify a monitoring person of the information. After receiving the information, the monitoring person may manually control the liquid refill valve 31 to connect the path between the liquid refill device 41 and the liquid storage tank 211, so that the liquid refill device 41 supplements the coolant to the liquid storage tank 211 through the liquid refill opening 2111d.

Similarly, when the liquid cooling device generates the information indicating to discharge coolant from the liquid storage tank 211, the liquid cooling device may automatically control the liquid discharge valve 32 to connect a path between the liquid discharge device 42 and the liquid storage tank 211, so that the coolant in the liquid storage tank is discharged to the liquid discharge device 42 through the liquid discharge opening 2111e. Alternatively, when the liquid cooling device generates the information indicating to discharge coolant from the liquid storage tank 211, the liquid cooling device may notify the monitoring person of the information. After receiving the information, the monitoring person may manually control the liquid discharge valve 32 to connect the path between the liquid discharge device 42 and the liquid storage tank 211, so that the coolant in the liquid storage tank is discharged to the liquid discharge device 42 through the liquid discharge opening 2111e.

Specifically, when the coolant is supplemented to the liquid storage tank 211 or the redundant coolant in the liquid storage tank 211 is discharged, it may be considered that the coolant is supplemented when no coolant is output from the first liquid outlet 2111b and the second liquid outlet 2111c, that is, the coolant in the liquid storage tank 211 of the liquid cooling device does not perform heat exchange with the liquid cooling unit 212, and the liquid cooling device does not deliver the coolant to the electric vehicle. In this way, detection precision of the liquid level sensor 2113 and normal liquid cooling heat dissipation by the liquid cooling device for the electric vehicle can be ensured. This is because when the coolant in the liquid storage tank 211 of the liquid cooling device performs heat exchange with the liquid cooling unit 212, the coolant is supplemented to the liquid storage tank 211 or the coolant in the liquid storage tank 211 is discharged, because the first liquid outlet 2111b and the liquid refill opening 2111d simultaneously deliver the coolant, or the first liquid outlet 2111b and the liquid discharge opening 2111e simultaneously deliver the coolant, the liquid level of the coolant accommodated in the tank body 2111 fluctuates. However, the fluctuation of the liquid level may cause a deviation of the liquid level sensor 2113 during detection, and affect detection precision of the liquid level sensor 2113. When the liquid cooling device delivers the coolant to the electric vehicle, if the coolant is supplemented to the liquid storage tank 211 or the coolant in the liquid storage tank 211 is discharged, because the second liquid outlet 2111c and the liquid refill opening 2111d simultaneously deliver the coolant, or the first liquid outlet 2111b and the liquid discharge opening 2111e simultaneously deliver the coolant, the pressure in the liquid storage tank 211 fluctuates, or the temperature of the coolant in the liquid storage tank 211 fluctuates. However, the fluctuation of the pressure in the liquid storage tank 211 or the fluctuation of the temperature of the coolant in the liquid storage tank 211 affects normal liquid cooling heat dissipation by the liquid cooling device for the electric vehicle. Therefore, in this application, the coolant is supplemented to the liquid storage tank 211 when no coolant is output from the first liquid outlet 2111b and the second liquid outlet 2111c, so that detection precision of the liquid level sensor 2113 and normal liquid cooling heat dissipation by the liquid cooling device for the electric vehicle can be ensured as much as possible, to improve working reliability of the liquid cooling device.

In this embodiment of this application, the liquid level sensor 2113 may detect the liquid level of the coolant accommodated in the tank body 2111. The liquid cooling device may control, based on results of comparison between the liquid level and the first preset height and comparison between the liquid level and the second preset height, different valves to connect different paths. In this way, the liquid level of the coolant accommodated in the tank body 2111 meets a corresponding height requirement, to avoid a case in which a coolant requirement of the electric vehicle cannot be met due to insufficient coolant in the liquid storage tank 211, and avoid a case in which another component is damaged due to overflow of the coolant that may be caused by excessive coolant in the liquid storage tank 211, so as to improve reliability of providing the coolant for the electric vehicle by the liquid cooling device, and reduce a probability that the liquid cooling device damages the another component.

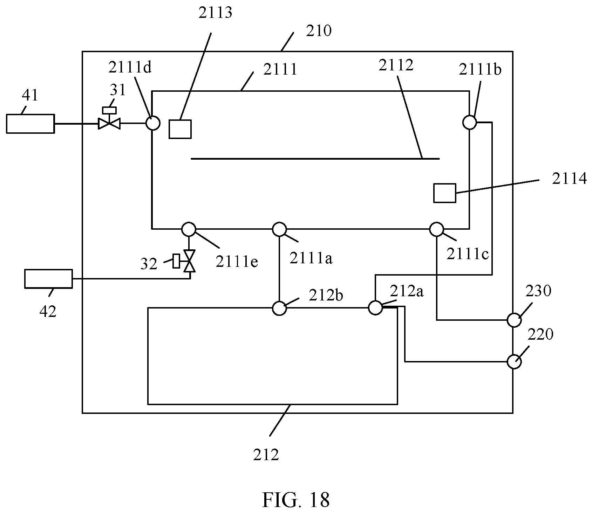

In an embodiment, as shown in FIG. 18, the liquid storage tank is further provided with a pH sensor 2114, the pH sensor 2114 is located in the lower chamber, and the pH sensor is configured to detect a pH value of the coolant in the tank body.

In this embodiment of this application, it is designed that the pH sensor 2114 is located in the lower chamber, so that accuracy of the pH value of the coolant detected by the pH sensor can be improved. This is because compared with the temperature of the coolant in the lower chamber, the temperature of the coolant in the upper chamber is higher, and a pH value of the coolant with a higher temperature is likely to be decreased. If the pH sensor is located in the upper chamber, the pH value that is of the coolant and that is detected by the pH sensor is inaccurate. This affects determining of the pH value of the coolant in the liquid storage tank by the liquid cooling device, and further affects normal charging of the electric vehicle. Therefore, in this application, the pH sensor 2114 is designed to be located in the lower chamber, so that accuracy of the pH value that is of the coolant and that is detected by the pH sensor can be improved. This helps the liquid cooling device determine the pH value of the coolant in the liquid storage tank, and further facilitates normal charging of the electric vehicle.

In an embodiment, the liquid cooling device is configured to: when the pH value of the coolant in the tank body is less than a first pH threshold, generate information indicating to supplement coolant to the liquid storage tank; or when the pH value of the coolant in the tank body is less than a second pH threshold, generate information indicating to replace the coolant in the liquid storage tank. The second pH threshold is less than the first pH threshold.

In this embodiment of this application, because coolant whose pH value indicates that the coolant is acidic or strongly alkaline increases corrosion on a metal, generally, the coolant is weakly alkaline. Generally, the pH value of the coolant decreases due to impact of a temperature, causing the coolant to become acidic. When the coolant in the tank body is weak acidic, the pH value of the coolant in the liquid storage tank may be increased by supplementing coolant into the liquid outlet tank. Therefore, when the pH value of the coolant in the tank body is less than the first pH threshold, the liquid cooling device may generate the information indicating to supplement coolant to the liquid storage tank. When the coolant in the tank body is strong acidic, even if coolant is supplemented to the tank body, the pH value of the coolant in the tank body may indicate that the coolant is not weakly alkaline. Therefore, when the pH value of the coolant in the tank body is less than the second pH threshold, the liquid cooling device generates the information indicating to replace the coolant in the liquid storage tank.

In this embodiment of this application, the pH sensor may detect the pH value of the coolant in the tank body, and the liquid cooling device may generate different information based on results of comparison between the pH value and the first pH threshold and comparison between the pH value and the second pH threshold. In this way, the pH value of the coolant in the tank body meets a corresponding requirement, to avoid corrosion of the tank body or the electric vehicle caused by an excessively low pH value of the coolant in the liquid storage tank, and prolong service lives of the liquid cooling device and the electric vehicle.

In this embodiment of this application, when the liquid cooling device generates the information indicating to supplement coolant to the liquid storage tank 211, the liquid cooling device may automatically control the liquid refill valve 31 to connect the path between the liquid refill device 41 and the liquid storage tank 211, so that the liquid refill device 41 supplements the coolant to the liquid storage tank 211 through the liquid refill opening 2111d. Alternatively, when the liquid cooling device generates the information indicating to supplement coolant to the liquid storage tank 211, the liquid cooling device may notify a monitoring person of the information. After receiving the information, the monitoring person may manually control the liquid refill valve 31 to connect the path between the liquid refill device 41 and the liquid storage tank 211, so that the liquid refill device 41 supplements the coolant to the liquid storage tank 211 through the liquid refill opening 2111d.

Similarly, when the liquid cooling device generates the information indicating to replace the coolant in the liquid storage tank 211, the liquid cooling device may automatically first control the liquid discharge valve 32 to connect the path between the liquid discharge device 42 and the liquid storage tank 211, so that the coolant in the liquid storage tank is discharged to the liquid discharge device 42 through the liquid discharge opening 2111e. After the coolant in the liquid storage tank 211 is discharged, the liquid cooling device controls the liquid refill valve 31 to connect the path between the liquid refill device 41 and the liquid storage tank 211, so that the liquid refill device 41 supplements the coolant to the liquid storage tank 211 through the liquid refill opening 2111d. Alternatively, when the liquid cooling device generates the information indicating to replace the coolant in the liquid storage tank 211, the liquid cooling device may notify the monitoring person of the information. After receiving the information, the monitoring person may first manually control the liquid discharge valve 32 to connect the path between the liquid discharge device 42 and the liquid storage tank 211, so that the coolant in the liquid storage tank is discharged to the liquid discharge device 42 through the liquid discharge opening 2111e. After the coolant in the liquid storage tank 211 is discharged, the liquid cooling device controls the liquid refill valve 31 connect the path between the liquid refill device 41 and the liquid storage tank 211, so that the liquid refill device 41 supplements the coolant to the liquid storage tank 211 through the liquid refill opening 2111d.

Both the first pH threshold and the second pH threshold in this embodiment of this application may be set to values less than 7.0. For example, the first pH threshold may be set to 6.0, and the second pH threshold may be set to 4.0.

In this embodiment of this application, for example, the first pH threshold is 6.0. When the pH sensor 2114 detects that the pH value of the coolant accommodated in the tank body 2111 is 5.5, and the pH value is less than the first pH threshold, it indicates that the coolant in the liquid storage tank 211 is weakly acidic. If the coolant is delivered to the power battery, corrosion of the power battery is accelerated, and a life of the power battery is reduced. Therefore, the pH value of the coolant in the liquid storage tank 211 needs to be adjusted. The liquid refill valve 31 may be controlled to deliver the coolant in the liquid refill device 41 to the liquid storage tank 211 through the liquid refill opening 2111d. The pH value of the coolant in the liquid refill device 41 indicates that the coolant is alkaline. After the supplemented coolant is mixed with the original weak acidic coolant in the liquid storage tank 211, acidity of the coolant in the liquid storage tank 211 is weakened. In this case, the coolant is neutral or even weakly alkaline.

Specifically, the coolant is supplemented to the liquid storage tank when no coolant is output from the first liquid outlet 2111b and the second liquid outlet 2111c. A reason is similar to that in the foregoing descriptions. Details are not described herein again.

For example, the second pH threshold is 4.0. When the pH value that is of the coolant accommodated in the tank body 2111 and that is detected by the pH sensor 2114 is 3.0, and the pH value is less than the second pH threshold, it indicates that the coolant in the liquid storage tank 211 is strongly acidic. If the coolant is delivered to the power battery, corrosion of the power battery is further aggravated, and a life of the power battery is further reduced. Therefore, when the coolant in the liquid storage tank 211 of the liquid cooling device does not perform heat exchange with the liquid cooling unit 212 and the liquid cooling device does not deliver the coolant to the electric vehicle, the liquid discharge valve 32 may be first controlled to connect the path between the liquid discharge device 42 and the liquid discharge opening 2111e. After the coolant in the liquid storage tank 211 is discharged, the liquid refill valve 31 is controlled to connect the path between the liquid refill device 41 and the liquid refill opening 2111d, so that the liquid refill device 41 delivers the coolant to the liquid storage tank 211 through the liquid refill opening 2111d. Through the foregoing process, it is equivalent to that the coolant in the liquid storage tank 211 is replaced, and a pH value of the replaced coolant indicates that the replaced coolant is weakly alkaline. The coolant is delivered to the electric vehicle, so that corrosion of the electric vehicle can be minimized.

In this embodiment of this application, the pH sensor 2114 may detect the pH value of the coolant, and control, based on results of comparison between the pH value and the first pH threshold and comparison between the pH value and the second pH threshold, different valves to connect different paths. In this way, the pH value of the coolant in the liquid storage tank 211 meets a corresponding pH requirement, to avoid corrosion of the tank body or the electric vehicle caused by an excessively low pH value of the coolant in the liquid storage tank 211, and prolong service lives of the liquid cooling device and the electric vehicle.

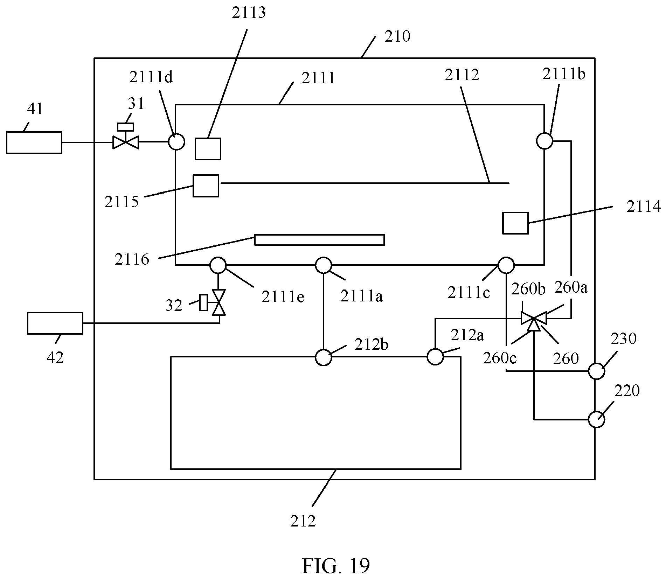

In an embodiment, as shown in FIG. 19, the liquid storage tank 211 is further provided with a temperature sensor 2115, the temperature sensor 2115 is located at one of the spacings, and the temperature sensor 2115 is configured to detect the temperature of the coolant in the tank body.

In this embodiment of this application, the temperature sensor 2115 is located at one of the spacings, so that accuracy of the temperature that is of the coolant in the tank body and that is detected by the temperature sensor 2115 can be improved. This is because a temperature in the upper chamber is higher than a temperature in the lower chamber. If the temperature sensor 2115 is disposed in the upper chamber, the temperature that is of the coolant in the tank body and that is detected by the temperature sensor 2115 is high. If the temperature sensor 2115 is disposed in the lower chamber, the temperature that is of the coolant in the tank body and that is detected by the temperature sensor 2115 is low. Because the coolant in the lower chamber flows into the upper chamber through the spacing, the temperature of the coolant at the spacing is accurate. Therefore, in this application, the temperature sensor 2115 is designed to be located at one of the spacings, so that accuracy of detecting the temperature of the coolant in the tank body by the temperature sensor 2115 can be improved.

Still refer to FIG. 19. In an embodiment, the liquid storage tank 211 is further provided with an electric heater 2116, the electric heater 2116 is located in the lower chamber, and the electric heater 2116 is configured to heat the coolant in the tank body.

In this embodiment of this application, generally, the temperature of the coolant in the upper chamber is higher than the temperature of the coolant in the lower chamber. If the electric heater 2116 is disposed in the upper chamber, the electric heater 2116 first heats the coolant in the upper chamber. This is not conducive to heat dissipation by the liquid cooling device for the electric vehicle. In this application, the electric heater 2116 is designed to be located in the lower chamber. When the temperature of the coolant delivered by the liquid cooling device to the electric vehicle is low, the liquid cooling device may control the electric heater 2116 to run, to heat the coolant in the lower chamber, so that a temperature requirement of the electric vehicle on the coolant can be met, and heat dissipation for the electric vehicle can be implemented, to ensure normal charging of the electric vehicle.

To better control the flow direction of the coolant, in an embodiment, as shown in FIG. 19, the liquid cooling device further includes a three-way valve 260. A first valve opening 260a of the three-way valve 260 is connected to the first liquid outlet 2111b, a second valve opening 260b of the three-way valve 260 is connected to the liquid inlet 212a of the liquid cooling unit, and a third valve opening 260c of the three-way valve 260 is connected to at least one liquid inlet connector. In view of this, connection statuses of the three valve openings of the three-way valve 260 may be adjusted, so that the liquid cooling device can run in different working modes.

Specifically, when the first valve opening 260a communicates with the second valve opening 260b, it may be considered that the liquid cooling device is in an internal circulation cooling mode. To be specific, the coolant in the liquid storage tank 211 returns to the liquid storage tank 211 through the first liquid outlet 2111b, the first valve opening 260a, the second valve opening 260b, the liquid inlet 212a of the liquid cooling unit, the liquid outlet 212b of the liquid cooling unit, and the first liquid inlet 2111a. In this process, heat exchange between the coolant in the liquid storage tank 211 and the liquid cooling unit is implemented. When the second valve opening 260b communicates with the third valve opening 260c, it may be considered that the liquid cooling device is in an external circulation cooling mode. To be specific, the coolant in the liquid storage tank 211 returns to the liquid storage tank 211 through the second liquid outlet 2111c, the liquid outlet connector 230, the liquid inlet connector 220, the third valve opening 260c, the second valve opening 260b, the liquid inlet 212a of the liquid cooling unit, the liquid outlet 212b of the liquid cooling unit, and the first liquid inlet 2111a. In this process, heat exchange between the coolant in the liquid storage tank 211 and the liquid cooling unit is implemented after the coolant absorbs heat of the electric vehicle.

In this embodiment of this application, the liquid cooling device is configured to: when no coolant is output from the first liquid outlet 2111b and the second liquid outlet 2111c, and when the temperature of the coolant is greater than the first temperature threshold, control the three-way valve 260 to connect a path between the liquid storage tank and the liquid cooling unit 212. Alternatively, when no coolant is output from the first liquid outlet 2111b and the second liquid outlet 2111c, and the temperature of the coolant is less than the second temperature threshold, the electric heater 2116 is controlled to run. The second temperature threshold is less than the first temperature threshold.

In this embodiment of this application, for example, the first temperature threshold is t1 and the second temperature threshold is t2. When the temperature that is of the coolant accommodated in the tank body 2111 and that is detected by the temperature sensor 2115 is t0, and it is assumed that t0>t1, it indicates that the temperature of the coolant in the liquid storage tank 211 is excessively high at this time. As a result, the pH value of the coolant is likely to be decreased, and seriously, the coolant may be weakly acidic. In addition, when the liquid cooling device needs to deliver the coolant to the electric vehicle, because the temperature of the coolant in the liquid storage tank 211 is excessively high, a coolant requirement of the electric vehicle cannot be met. Therefore, in this case, the temperature of the coolant in the liquid storage tank 211 should be decreased. It is assumed that t0<t2, and it indicates that the temperature of the coolant in the liquid storage tank 211 is excessively low at this time. When the liquid cooling device needs to deliver the coolant to the electric vehicle, because the temperature of the coolant in the liquid storage tank 211 is excessively low, a coolant requirement of the electric vehicle is possibly not be met. Therefore, in this case, the temperature of the coolant in the liquid storage tank 211 should be increased.

Specifically, the temperature of the coolant in the liquid storage tank 211 may be decreased or increased when no coolant is output from the first liquid outlet 2111b and the second liquid outlet 2111c, that is, when the coolant in the liquid storage tank 211 of the liquid cooling device does not perform heat exchange with the liquid cooling unit 212 and the liquid cooling device does not deliver the coolant to the electric vehicle. In this way, detection accuracy of the temperature sensor 2115 and normal liquid cooling heat dissipation by the liquid cooling device for the electric vehicle can be ensured. This is because if the temperature of the coolant in the liquid storage tank 211 is decreased or increased when the coolant in the liquid storage tank 211 of the liquid cooling device performs heat exchange with the liquid cooling unit 212, because the coolant in the liquid cooling device is already in an internal circulation, the temperature of the coolant in the liquid storage tank 211 keeps changing, and the temperature change causes a deviation during detection of the temperature sensor 2115, thereby affecting detection accuracy of the temperature sensor 2115. If the temperature of the coolant in the liquid storage tank 211 is decreased or increased when the liquid cooling device delivers the coolant to the electric vehicle, because the second liquid outlet 2111c and the first liquid outlet 2111b simultaneously deliver the coolant, the temperature of the coolant in the liquid storage tank 211 fluctuates, and the fluctuation of the temperature of the coolant in the liquid storage tank 211 affects normal liquid cooling heat dissipation by the liquid cooling device for the electric vehicle. Therefore, this application is designed to be executed when no coolant is output from the first liquid outlet 2111b and the second liquid outlet 2111c, to decrease or increase the temperature of the coolant in the liquid storage tank 211, so as to ensure detection accuracy of the temperature sensor 2115 and normal liquid cooling heat dissipation by the liquid cooling device for the electric vehicle.

In this embodiment of this application, the temperature sensor 2115 may detect the temperature of the coolant. The liquid cooling device may control, based on results of comparison between the temperature and the first temperature threshold and comparison between the temperature and the second temperature threshold, the three-way valve 260 to connect a path between the liquid storage tank 211 and the liquid cooling unit 212 or control the electric heater 2116 to run, so that the temperature of the coolant in the liquid storage tank 211 meets a corresponding temperature requirement. This can avoid a case in which a coolant requirement of the electric vehicle cannot be met due to an excessively low or excessively high temperature of the coolant in the liquid storage tank 211, and can further avoid a case in which the pH value of the coolant decreases due to an excessively low temperature of the coolant in the liquid storage tank 211 and corrosion of the liquid cooling device and the electric vehicle may be caused, to prolong service lives of the liquid cooling device and the electric vehicle.

It should be understood that, in some embodiments, when the charging device charges the electric vehicle, if an outdoor ambient temperature is low, charging efficiency is low. In this case, the liquid cooling device may control the electric heater 2116 to run, to heat the coolant in the liquid storage tank 211, so that the temperature of the coolant in the liquid storage tank 211 increases. When the heated coolant in the liquid storage tank 211 flows through the power battery of the electric vehicle, the power battery may be heated. In a heating process, a temperature of the power battery gradually increases. When the temperature of the power battery reaches a preset value, charging efficiency of the power battery is obviously improved. As the power battery is continuously charged, the temperature of the power battery is excessively high. In this case, the liquid cooling device may stop running of the electric heater 2116, to avoid a further increase of the temperature of the power battery. In addition, to further decrease the temperature of the power battery, the liquid cooling device may deliver the coolant with a lower temperature to the electric vehicle. The coolant may take away heat generated in the charging process of the power battery, to cool the power battery. This helps improve boost charging performance of the power battery.

It should be noted that, in some embodiments, the tank body 2111 may be provided with only the liquid refill opening 2111d and the liquid discharge opening 2111e. When the liquid level of the coolant accommodated in the tank body 2111 does not meet a corresponding height requirement, the monitoring person may supplement coolant to the tank body 2111 through the liquid refill opening 2111d, or discharge a part of the coolant in the tank body 2111 through the liquid discharge opening 2111e, so that the liquid level of the coolant accommodated in the tank body 2111 meets the corresponding height requirement. Alternatively, when the pH value of the coolant in the tank body 2111 does not meet a corresponding pH requirement, the monitoring person may perform a corresponding action based on information generated by the liquid cooling device.

A specific process is similar to that in the foregoing descriptions, and a difference lies in that the liquid cooling device in the foregoing embodiment performs monitoring and controls a corresponding valve. However, in this embodiment of this application, after the liquid cooling device generates information, the monitoring person may perform a corresponding action based on the information, for example, opening a cover of the liquid refill opening 2111d or the liquid discharge opening 2111e, to supplement coolant to the liquid storage tank or discharge coolant from the liquid storage tank.

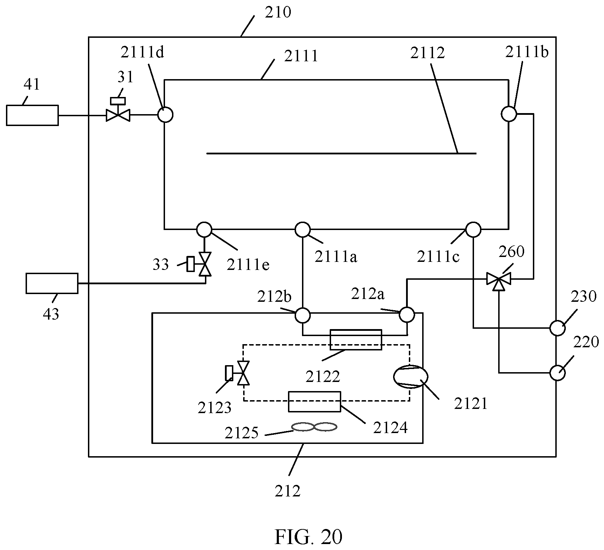

Refer to FIG. 20. In an embodiment, the liquid cooling unit 212 includes a compressor 2121, a first heat exchanger 2122, an expansion valve 2123, and a second heat exchanger 2124 that are sequentially connected. The first heat exchanger 2122 includes a first refrigerant path and a first coolant path. The first refrigerant path is connected between the compressor 2121 and the expansion valve 2123. The first refrigerant path is used for heat exchange with the first coolant path. A liquid outlet of the first coolant path is connected to the first liquid inlet 211a, and a liquid inlet of the first coolant path is connected to the first liquid outlet 2111b or the liquid inlet connector 220.

In this embodiment of this application, the first heat exchanger 2122 may be a plate heat exchanger. The plate heat exchanger is a heat exchanger formed by stacking a series of metal sheets having a specific corrugated shape, and a coolant path and a refrigerant path that are independent of each other may be formed between the metal sheets. In actual application, heat of coolant in the first coolant path may be transferred, through heat conduction, to heat exchange liquid in the first refrigerant path through the metal sheet, to cool the coolant in the first coolant path.

During specific implementation, when the charging device charges the electric vehicle, the liquid cooling device may input coolant to the electric vehicle, and heat generated by the electric vehicle is absorbed by the coolant. The coolant that absorbs heat flows into the first coolant path through the liquid return port of the electric vehicle, the liquid inlet connector 220, and the liquid inlet 212a of the liquid cooling unit. The first heat exchanger 2122 may transfer, to the heat exchange liquid in the first refrigerant path through heat exchange, the heat absorbed by the coolant in the first coolant path, to cool the coolant in the first coolant path.

Then, the cooled coolant in the first coolant path flows into the electric vehicle through the liquid outlet 212b of the liquid cooling unit, the first liquid inlet 2111a, the second liquid outlet 2111c, and the liquid injection port of the electric vehicle, and continues to perform cyclic heat dissipation for the electric vehicle. After heat exchange, the heat exchange liquid in the first refrigerant path may pass through the expansion valve 2123, the second heat exchanger 2124, and the compressor 2121, to implement cooling circulation of the heat exchange liquid.

When the liquid cooling device does not input coolant to the electric vehicle, the liquid storage tank 211 in the liquid cooling device performs heat exchange with the liquid cooling unit 212. Specifically, the coolant in the liquid storage tank 211 flows out from the first liquid outlet 2111b, and flows into the first coolant path through the liquid inlet 212a of the liquid cooling unit. The first heat exchanger 2122 may transfer, to the heat exchange liquid in the first refrigerant path through heat exchange, the heat absorbed by the coolant in the first coolant path, to cool the coolant in the first coolant path.

In this embodiment of this application, when the liquid cooling device dissipates heat through liquid cooling heat dissipation, the liquid cooling unit 212 may dissipate, through liquid-liquid heat exchange, heat for the coolant flowing out of the first liquid outlet 2111b. Efficiency of dissipating heat for the coolant by the liquid cooling unit is high. This helps improve a cooling speed of the coolant in the liquid storage tank. In addition, the liquid cooling unit 212 may dissipate, through liquid-liquid heat exchange, heat for the coolant flowing out of the electric vehicle. Efficiency of dissipating heat for the coolant by the liquid cooling unit 212 is high. This helps further improve heat dissipation effect of the coolant for the electric vehicle, to meet an increasing heat dissipation requirement of the electric vehicle.

Still refer to FIG. 20. In an embodiment, the liquid cooling unit 212 further includes a fan 2125, and an air vent of the fan 2125 faces the second heat exchanger 2124. In this way, the fan 2125 may accelerate a flow rate of air flowing through the second heat exchanger 2124, to cool the second heat exchanger 2124.

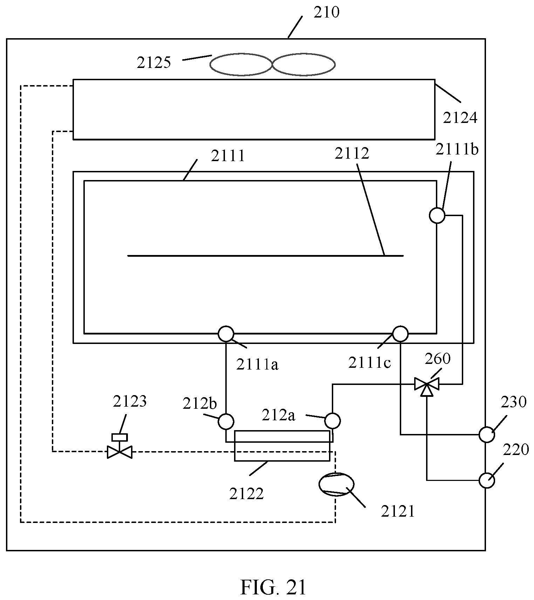

In an actual scenario, components in the liquid cooling device are disposed according to a diagram shown in FIG. 21. Compared with that in FIG. 20, the second heat exchanger 2124 shown in FIG. 21 is disposed above the liquid storage tank, and the fan 2125 is disposed above the second heat exchanger 2124. An advantage of this design is that an air duct is easily formed, and heat is dissipated to an external environment. This facilitates heat dissipation effect of the liquid cooling device for the electric vehicle.

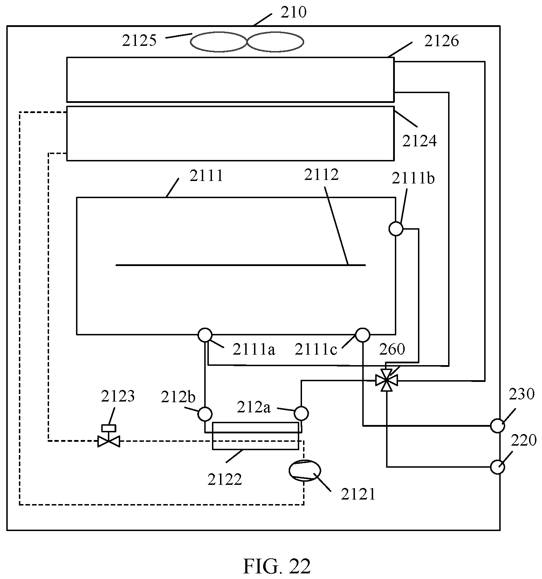

In an embodiment, as shown in FIG. 22, the liquid cooling unit further includes a third heat exchanger 2126 and a fan 2125, an air vent of the fan 2125 faces the third heat exchanger 2126 and the second heat exchanger 2124, a liquid inlet of the third heat exchanger 2126 is connected to the liquid inlet connector 220 or the first liquid outlet 2111b, and a liquid outlet of the third heat exchanger 2126 is connected to the first liquid inlet 2111a.

In this embodiment of this application, compared with the embodiment shown in FIG. 21, the third heat exchanger 2126 is added. In this case, the air vent of the fan 2125 faces the third heat exchanger 2126 and the second heat exchanger 2124. The fan 2125 may accelerate a flow rate of coolant flowing through the third heat exchanger 2126, to cool the coolant in the third heat exchanger 2126, and accelerate a flow rate of coolant flowing through the second heat exchanger 2124, to cool the coolant in the second heat exchanger 2124. In addition, in this design, switching between a natural heat dissipation mode and a mechanical cooling mode may be further implemented.

Specifically, when the outdoor ambient temperature is low, the coolant may be cooled by using the natural heat dissipation mode. For example, the liquid cooling device dissipates heat for the electric vehicle. The coolant in the liquid storage tank is delivered to the electric vehicle through the second liquid outlet 2111c and the liquid outlet connector 230. The coolant may absorb the heat generated by the power battery in the charging process. Then, the coolant that absorbs heat flows into the third heat exchanger 2126 through the liquid inlet connector 220 connected to the liquid return port of the electric vehicle. Because the outdoor ambient temperature is low, the fan 2125 may perform air cooling heat dissipation on the coolant flowing into the third heat exchanger 2126, and the coolant, after air cooling heat dissipation by the fan, in the third heat exchanger 2126 flows into the liquid storage tank through the first liquid inlet 2111a, to implement heat dissipation for the electric vehicle. In this mode, the compressor is not started, and the compressor, the first heat exchanger, and the second heat exchanger are in a non-working state. This can reduce power consumption and improve heat dissipation efficiency.

When the outdoor ambient temperature is high, the coolant may be cooled in the mechanical cooling mode. Still, for example, the liquid cooling device dissipates heat for the electric vehicle. The coolant in the liquid storage tank is delivered to the electric vehicle through the second liquid outlet 2111c and the liquid outlet connector 230. The coolant may absorb the heat generated by the power battery in the charging process. Then, the coolant that absorbs heat flows into the first heat exchanger 2122 through the liquid inlet connector 220 connected to the liquid return port of the electric vehicle, and the first heat exchanger 2122 may transfer, to the heat exchange liquid in the first refrigerant path through heat exchange, the heat absorbed by the coolant in the first coolant path, to cool the coolant in the first coolant path. Then, the cooled coolant in the first coolant path flows into the electric vehicle through the liquid outlet 212b of the liquid cooling unit, the first liquid inlet 2111a, the second liquid outlet 2111c, and the liquid injection port of the electric vehicle, and continues to perform cyclic heat dissipation for the electric vehicle. The heat exchange liquid in the first refrigerant path may be transferred to the second heat exchanger 2124 after heat exchange, and the fan 2125 may perform air cooling heat dissipation on the heat exchange liquid flowing into the second heat exchanger 2124, to cool the heat exchange liquid in the second heat exchanger 2124. In this mode, a requirement for the outdoor ambient temperature is low. Even if the ambient temperature is high, heat dissipation for the electric vehicle can be implemented, and reliability is high.

In addition, in the mechanical cooling mode, the coolant that absorbs heat flows into the liquid storage tank from the liquid inlet connector after one heat dissipation. In a process of cooling the coolant that absorbs heat, a loss is small, and heat dissipation efficiency is high.

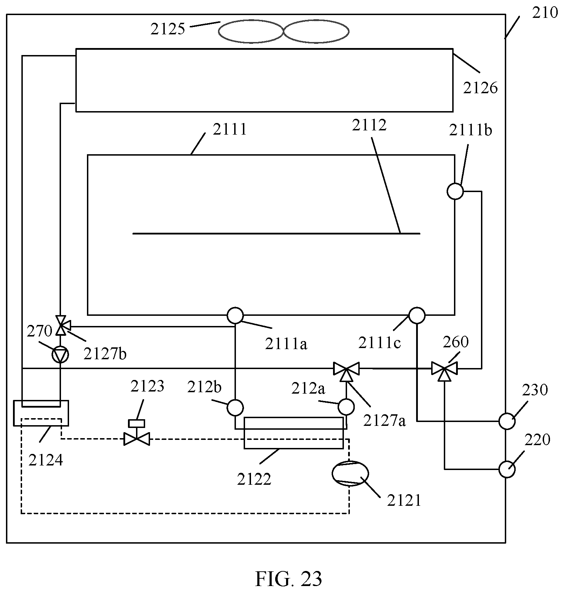

In an embodiment, as shown in FIG. 23, the second heat exchanger 2124 includes a second coolant path and a second refrigerant path, and the second refrigerant path is used for heat exchange with the second coolant path. The liquid cooling unit further includes a third heat exchanger 2126, a fan 2125, and two three-way valves: 2127a and 2127b, and an air vent of the fan 2125 faces the third heat exchanger 2126. A liquid outlet of the third heat exchanger 2126 is connected to a liquid inlet of the second coolant path, and a liquid inlet of the third heat exchanger 2126 is connected to a liquid outlet of the second coolant path.

A first valve opening of one three-way valve 2127a is connected to the liquid inlet of the first coolant path, a second valve opening of the one three-way valve 2127a is connected to the liquid inlet of the third heat exchanger 2126, and a third valve opening of the one three-way valve 2127a is connected to the liquid inlet connector 220. A first valve opening of the other three-way valve 2127b is connected to the liquid outlet of the third heat exchanger 2126, a second valve opening of the other three-way valve 2127b is connected to the liquid inlet of the second coolant path, and a third valve opening of the other three-way valve 2127b is connected to the first liquid inlet 2111a.

In this embodiment of this application, compared with the embodiment shown in FIG. 21, the third heat exchanger 2126 is added. In this case, the air vent of the fan 2125 faces the third heat exchanger 2126, and the fan 2125 may accelerate a flow rate of coolant flowing through the third heat exchanger 2126, to cool the coolant in the third heat exchanger 2126. In addition, in this design, switching between a natural heat dissipation mode and a mechanical cooling mode may be further implemented.

Specifically, when the outdoor ambient temperature is low, the coolant may be cooled by using the natural heat dissipation mode. In this mode, the liquid cooling device controls the second valve opening of the three-way valve 2127a to communicate with the third valve opening and the first valve opening of the three-way valve 2127b to communicate with the third valve opening. For example, the liquid cooling device dissipates heat for the electric vehicle. The coolant in the liquid storage tank is delivered to the electric vehicle through the second liquid outlet 2111c and the liquid outlet connector 230. The coolant may absorb the heat generated by the power battery in the charging process. Then, the coolant that absorbs heat may directly flow into the third heat exchanger 2126 through the liquid inlet connector 220 connected to the liquid return port of the electric vehicle. Because the outdoor ambient temperature is low, the fan 2125 may perform air cooling heat dissipation on the coolant flowing into the third heat exchanger 2126, and the coolant after air cooling heat dissipation by the fan flows into the liquid storage tank through the first liquid inlet 2111a, to implement heat dissipation for the electric vehicle. In this mode, the compressor is not started, and the compressor, the first heat exchanger, and the second heat exchanger are in a non-working state. This can reduce power consumption and improve heat dissipation efficiency.

When the outdoor ambient temperature is high, the coolant may be cooled in the mechanical cooling mode. In this mode, the liquid cooling device controls the first valve opening of the three-way valve 2127a to communicate with the third valve opening and the first valve opening of the three-way valve 2127b to communicate with the second valve opening. Still, for example, the liquid cooling device dissipates heat for the electric vehicle. The coolant in the liquid storage tank is delivered to the electric vehicle through the second liquid outlet 2111c and the liquid outlet connector 230. The coolant may absorb the heat generated by the power battery in the charging process. Then, the coolant that absorbs heat flows into the first heat exchanger 2122 through the liquid inlet connector 220 connected to the liquid return port of the electric vehicle, and the first heat exchanger 2122 may transfer, to the heat exchange liquid in the first refrigerant path through heat exchange, the heat absorbed by the coolant in the first coolant path, to cool the coolant in the first coolant path. Then, the cooled coolant in the first coolant path flows into the electric vehicle through the liquid outlet 212b of the liquid cooling unit, the first liquid inlet 2111a, the second liquid outlet 2111c, and the liquid injection port of the electric vehicle, and continues to perform cyclic heat dissipation for the electric vehicle. The heat exchange liquid in the first refrigerant path may be transferred to the second coolant path of the second heat exchanger after heat exchange, the coolant in the second coolant path flows into the third heat exchanger 2126, and the fan 2125 may perform air cooling heat dissipation on the coolant flowing into the third heat exchanger 2126, to cool the coolant in the third heat exchanger 2126. In this mode, a requirement for the outdoor ambient temperature is low. Even if the ambient temperature is high, heat dissipation for the electric vehicle can be implemented, and reliability is high.

In addition, a pump 270 may be disposed between the second heat exchanger 2124 and the third heat exchanger 2126, and is configured to drive the coolant to flow between the second heat exchanger 2124 and the third heat exchanger 2126, to implement cooling circulation of the coolant

In this embodiment of this application, the third heat exchanger and the fan are added. The liquid cooling device may implement heat dissipation for the coolant in different modes. When the liquid cooling device implements heat dissipation for the coolant in the natural heat dissipation mode, the compressor does not need to be started. In this way, power consumption can be reduced, and heat dissipation efficiency can be improved. When the liquid cooling device implements heat dissipation for the coolant in the mechanical cooling mode, a requirement for the outdoor ambient temperature is low. Even if the ambient temperature is high, heat dissipation for the coolant can be implemented, and reliability is high. In this application, a mode of heat dissipation for the coolant can be flexibly switched based on the outdoor ambient temperature, so that heat dissipation for the coolant can be implemented, power consumption can be reduced, heat dissipation efficiency can be improved, and reliability can be improved.

In addition, in view of this design, in the two heat dissipation modes, the second coolant path may be shared. This facilitates integration of the liquid cooling device, and facilitates a miniaturization design of the liquid cooling device.

In addition, in this design, the air vent of the fan faces only the third heat exchanger, so that wind resistance is small, and heat dissipation effect is better. In addition, in the mechanical cooling mode, after flowing in from the liquid inlet connector, the coolant that absorbs heat flows into the liquid storage tank after two heat exchanges. Therefore, in this design, a heat dissipation requirement for a plurality of heat exchangers is low, so that costs can be reduced.

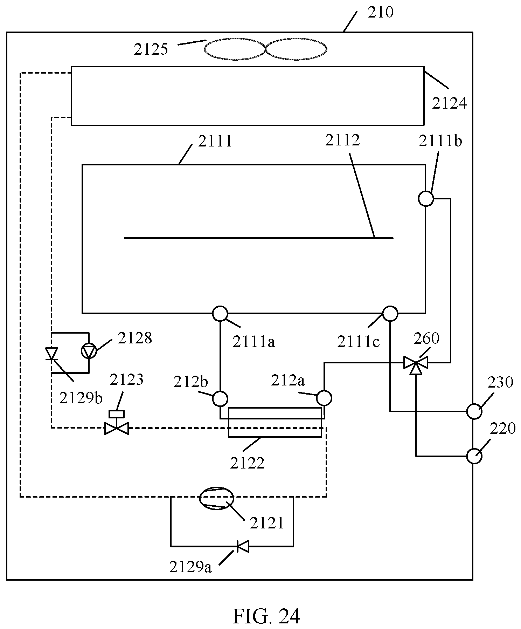

In an embodiment, as shown in FIG. 24, the liquid cooling unit includes one pump 2128 and two one-way valves: 2129a and 2129b. An inlet of one one-way valve 2129a is connected to the outlet of the first refrigerant path, an outlet of the one one-way valve 2129a is connected to the inlet of the second refrigerant path, an inlet of the other one-way valve 2129b is connected to the outlet of the second refrigerant path, and an outlet of the other one-way valve 2129b is connected to the inlet of the first refrigerant path. An inlet of the pump 2128 is connected to the outlet of the second refrigerant path, and an outlet of the pump 2128 is connected to the inlet of the first refrigerant path.

In this embodiment of this application, compared with the embodiment shown in FIG. 21, one pump 2128 and two one-way valves: 2129a and 2129b are added. In this design, switching between the natural heat dissipation mode and the mechanical cooling mode may also be implemented.

Specifically, when the outdoor ambient temperature is low, the coolant may be cooled by using the natural heat dissipation mode. For example, the liquid cooling device dissipates heat for the electric vehicle. The coolant in the liquid storage tank is delivered to the electric vehicle through the second liquid outlet 2111c and the liquid outlet connector 230. The coolant may absorb the heat generated by the power battery in the charging process. Then, the coolant that absorbs heat flows into the first heat exchanger 2122 through the liquid inlet connector 220 connected to the liquid return port of the electric vehicle, and the first heat exchanger 2122 may transfer, to the heat exchange liquid in the first refrigerant path through heat exchange, the heat absorbed by the coolant in the first coolant path, to cool the coolant in the first coolant path. Then, the cooled coolant in the first coolant path flows into the electric vehicle through the liquid outlet 212b of the liquid cooling unit, the first liquid inlet 2111a, the second liquid outlet 2111c, and the liquid injection port of the electric vehicle, and continues to perform cyclic heat dissipation for the electric vehicle. After heat exchange, the heat exchange liquid in the first refrigerant path may pass through the one-way valve 2129a, the second heat exchanger 2124, the pump 2128, and the expansion valve 2123, to implement cooling circulation of the heat exchange liquid. In this process, the compressor is not started. This can reduce power consumption and improve heat dissipation efficiency.

When the outdoor ambient temperature is high, the coolant may be cooled in the mechanical cooling mode. Still, for example, the liquid cooling device dissipates heat for the electric vehicle. The coolant in the liquid storage tank is delivered to the electric vehicle through the second liquid outlet 2111c and the liquid outlet connector 230. The coolant may absorb the heat generated by the power battery in the charging process. Then, the coolant that absorbs heat flows into the first heat exchanger 2122 through the liquid inlet connector 220 connected to the liquid return port of the electric vehicle, and the first heat exchanger 2122 may transfer, to the heat exchange liquid in the first refrigerant path through heat exchange, the heat absorbed by the coolant in the first coolant path, to cool the coolant in the first coolant path. Then, the cooled coolant in the first coolant path flows into the electric vehicle through the liquid outlet 212b of the liquid cooling unit, the first liquid inlet 2111a, the second liquid outlet 2111c, and the liquid injection port of the electric vehicle, and continues to perform cyclic heat dissipation for the electric vehicle. After heat exchange, the heat exchange liquid in the first refrigerant path may pass through the compressor 2121, the second heat exchanger 2124, the one-way valve 2129b, and the expansion valve 2123, to implement cooling circulation of the heat exchange liquid. In this mode, a requirement for the outdoor ambient temperature is low. Even if the ambient temperature is high, heat dissipation for the electric vehicle can be implemented, and reliability is high.

In addition, the two one-way valves are designed in this application to avoid reverse flow of the heat exchange liquid. Specifically, in the mechanical cooling mode, after heat exchange, the heat exchange liquid in the first refrigerant path may pass through the compressor 2121, the second heat exchanger 2124, the one-way valve 2129b, and the expansion valve 2123, to implement cooling circulation of the heat exchange liquid. If the one-way valve 2129a is replaced with a two-way valve, the heat exchange liquid flowing out from the compressor may flow reversely to the first heat exchanger from the two-way valve. This is not conducive to implementing cooling circulation of the first refrigerant path. In addition, in this mode, because the pump 2128 is in a non-working state, the coolant flowing out from the one-way valve 2129b does not flow into the second heat exchanger 2124 from the pump 2128. This can avoid reverse flow of the heat exchange fluid.

In the natural heat dissipation mode, after heat exchange, the heat exchange liquid in the first refrigerant path may pass through the one-way valve 2129a, the second heat exchanger 2124, the pump 2128, and the expansion valve 2123, to implement cooling circulation of the heat exchange liquid. If the one-way valve 2129b is replaced with a two-way valve, the heat exchange liquid flowing out from the pump 2128 may flow reversely to the second heat exchanger from the two-way valve. This is not conducive to implementing cooling circulation of the first refrigerant path. In addition, in this mode, because the compressor is in the non-working state, the coolant flowing out from the one-way valve 2129a does not flow into the first heat exchanger 2122 from the compressor 2121. This can avoid reverse flow of the heat exchange fluid.

It should be understood that FIG. 24 shows a case in which the one-way valve 2129b is located between the second heat exchanger and the expansion valve 2123. In another implementation, the one-way valve 2129b may alternatively be located between the second heat exchanger and the compressor, and may still achieve the foregoing effect. Details are similar to the foregoing process, and are not described again.

In this embodiment of this application, one pump 2128 and two one-way valves: 2129a and 2129b are added. The liquid cooling device may implement heat dissipation for the coolant in different modes. When the liquid cooling device implements heat dissipation for the coolant in the natural heat dissipation mode, the compressor does not need to be started. In this way, power consumption can be reduced, and heat dissipation efficiency can be improved. When the liquid cooling device implements heat dissipation for the coolant in the mechanical cooling mode, a requirement for the outdoor ambient temperature is low. Even if the ambient temperature is high, heat dissipation for the coolant can be implemented, and reliability is high. In this application, a mode of heat dissipation for the coolant can be flexibly switched based on the outdoor ambient temperature, so that heat dissipation for the coolant can be implemented, power consumption can be reduced, heat dissipation efficiency can be improved, and reliability can be improved.

In addition, designing two one-way valves can also avoid reverse flow of the heat exchange fluid. This helps implement cooling circulation of the first refrigerant path, helps implement normal heat dissipation for the electric vehicle, and helps ensure normal charging of the electric vehicle by the charging device.

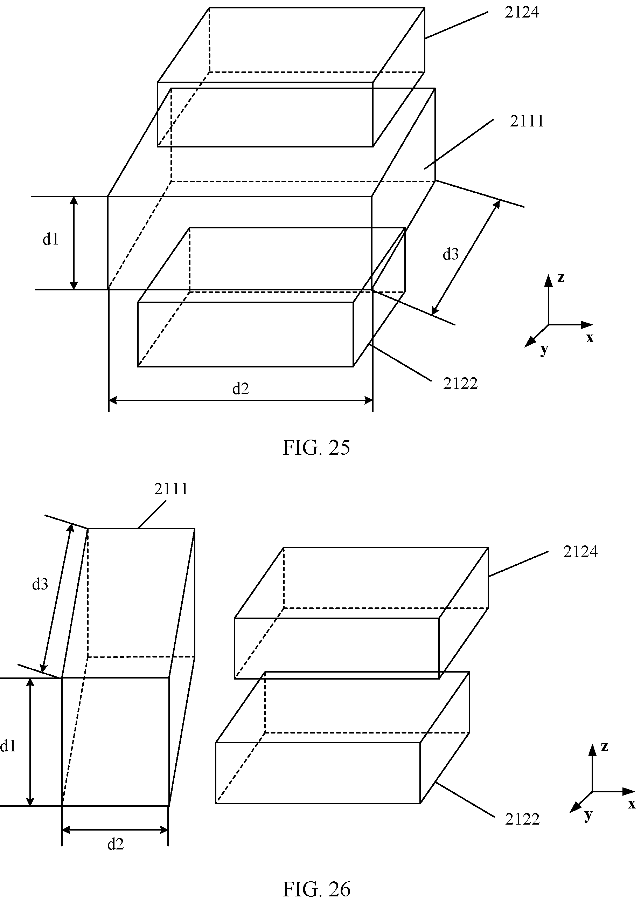

In an embodiment, as shown in FIG. 25, the first heat exchanger 2122 and the second heat exchanger 2124 are arranged in the first direction, the tank body 2111 is located between the first heat exchanger 2122 and the second heat exchanger 2124, a length of the tank body 2111 in the first direction is less than a length of the tank body 2111 in the second direction, and the second direction is perpendicular to the first direction.

Refer to FIG. 25. The first heat exchanger 2122 and the second heat exchanger 2124 are arranged in the first direction. The first direction is a z direction in the figure, and the second direction is a y direction or an x direction in the figure. A length of the tank body 2111 in the z direction is d1 in the figure, a length of the tank body 2111 in the x direction is d2 in the figure, a length of the tank body 2111 in the y direction is d3 in the figure, d1<d2, and d1<d3. If the length of the tank body 2111 in the first direction is greater than the length of the tank body 2111 in the second direction, partial space between the first heat exchanger 2122 and the second heat exchanger 2124 is wasted. This is not conducive to integration of the liquid cooling device. Therefore, this design in this application can avoid a waste of internal space of the liquid cooling device, facilitate integration of the liquid cooling device, and facilitate miniaturization of the liquid cooling device.

In an embodiment, as shown in FIG. 26, the first heat exchanger 2122 and the second heat exchanger 2124 are arranged in the first direction, the tank body 2111 and the liquid cooling unit are arranged in the second direction, and the length of the tank body 2111 in the first direction is greater than the length of the tank body 2111 in the second direction.

Refer to FIG. 26. The first heat exchanger 2122 and the second heat exchanger 2124 are arranged in the first direction, and the first direction is a z direction in the figure. The tank body 2111 and the liquid cooling unit are arranged in the second direction, and the second direction is an x direction in the figure. A length of the tank body 2111 in the z direction is d1 in the figure, a length of the tank body 2111 in the x direction is d2 in the figure, and d1>d2. If the length of the tank body 2111 in the first direction is less than the length of the tank body 2111 in the second direction, space above the tank body 2111 is wasted. This is not conducive to integration of the liquid cooling device. Therefore, this design in this application can avoid a waste of internal space of the liquid cooling device, facilitate integration of the liquid cooling device, and facilitate miniaturization of the liquid cooling device. In addition, in this design of this application, capacity expansion of the liquid cooling device can be further implemented. Because the tank body 2111 and the liquid cooling unit are arranged in the second direction, that is, the tank body 2111 and the liquid cooling unit are independent of each other. When capacity expansion of the liquid cooling device needs to be performed, only a size of the tank body needs to be increased. This is easy to implement.

In addition, this application further provides a charging device. The charging device includes a charging module, a charger, and the liquid cooling device according to any one of the foregoing embodiments. The charger is configured to output, to the electric vehicle, a current output by the charging module. The liquid cooling device is configured to: when the charging device charges the electric vehicle, perform heat exchange with the electric vehicle and at least one of the charging module or the charger.

The charging device may be the charging device in FIG. 1, and the liquid cooling device may be any one of FIG. 2 to FIG. 26. For content of the liquid cooling device, refer to the foregoing descriptions. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A liquid cooling device, wherein the liquid cooling device comprises a liquid storage tank, a liquid cooling unit, a liquid inlet connector, and a liquid outlet connector, the liquid outlet connector is configured to connect to a liquid injection port of an electric vehicle, and the liquid inlet connector is configured to connect to a liquid return port of the electric vehicle;
the liquid cooling unit is configured to cool coolant in the liquid storage tank, wherein the liquid storage tank comprises a tank body and at least one partition plate, the at least one partition plate is configured to divide the tank body into an upper chamber and a lower chamber, and the upper chamber communicates with the lower chamber;
the tank body is provided with a first liquid inlet and a first liquid outlet, the first liquid outlet is located in a part that is of the tank body and that corresponds to the upper chamber, the first liquid inlet is located in a part that is of the tank body and that corresponds to the lower chamber, the first liquid outlet is connected to a liquid inlet of the liquid cooling unit, and the first liquid inlet is connected to a liquid outlet of the liquid cooling unit; and
the tank body is further provided with a second liquid outlet, the second liquid outlet is located in the part that is of the tank body and that corresponds to the lower chamber, the second liquid outlet is connected to the liquid outlet connector, and the liquid inlet of the liquid cooling unit or the first liquid inlet is connected to the liquid inlet connector.

2. The liquid cooling device according to claim 1, wherein the tank body comprises a top plate, a bottom plate, and a plurality of side plates, the top plate and the bottom plate are disposed opposite to each other, and the plurality of side plates are located between the top plate and the bottom plate; and
the at least one partition plate comprises one partition plate, the one partition plate is disposed between the top plate and the bottom plate, and there is a spacing between the one partition plate and at least one of the side plates; or
the at least one partition plate comprises a plurality of partition plates, the plurality of partition plates are disposed between the top plate and the bottom plate, the plurality of partition plates are spaced from each other in a first direction, and the first direction is perpendicular to a direction from the top plate to the bottom plate.

3. The liquid cooling device according to claim 2, wherein when the at least one partition plate comprises one partition plate, and there is a spacing between the one partition plate and one of the plurality of side plates, the first liquid outlet is located on a side plate disposed opposite to the one of the side plates, and a distance from the first liquid outlet to the top plate is less than a distance from the first liquid outlet to the bottom plate.

4. The liquid cooling device according to claim 2, wherein when the at least one partition plate comprises one partition plate, the one partition plate is disposed between the top plate and the bottom plate, and there are spacings between the one partition plate and at least two of the plurality of side plates, or when the at least one partition plate comprises a plurality of partition plates, the first liquid outlet is located in the top plate.

5. The liquid cooling device according to any one of claims 2 to 4, wherein the first liquid inlet and the second liquid outlet are located in the bottom plate.

6. The liquid cooling device according to any one of claims 2 to 4, wherein the liquid storage tank further comprises at least one pressure relief valve, the pressure relief valve is located on the top plate, and the pressure relief valve is configured to discharge gas in the tank body.

7. The liquid cooling device according to any one of claims 1 to 6, wherein a liquid level sensor is disposed in the liquid storage tank, and the liquid level sensor is configured to detect a liquid level of the coolant accommodated in the tank body; and
the liquid cooling device is configured to:
when the liquid level is less than a first preset height, generate information indicating to supplement coolant into the liquid storage tank; or
when the liquid level is greater than a second preset height, generate information indicating to discharge coolant from the liquid storage tank, wherein
the second preset height is greater than the first preset height.

8. The liquid cooling device according to any one of claims 1 to 7, wherein the liquid storage tank is further provided with a pH sensor, the pH sensor is located in the lower chamber, and the pH sensor is configured to detect a pH value of the coolant in the tank body.

9. The liquid cooling device according to claim 8, wherein the liquid cooling device is configured to:
when the pH value of the coolant in the tank body is less than a first pH threshold, generate information indicating to supplement coolant into the liquid storage tank; or
when the pH value of the coolant in the tank body is less than a second pH threshold, generate information indicating to replace the coolant in the liquid storage tank, wherein
the second pH threshold is less than the first pH threshold.

10. The liquid cooling device according to any one of claims 2 to 6, wherein the liquid storage tank is provided with a temperature sensor, the temperature sensor is located at one of the spacings, and the temperature sensor is configured to detect a temperature of the coolant in the tank body.

11. The liquid cooling device according to any one of claims 1 to 10, wherein the liquid storage tank is further provided with an electric heater, the electric heater is located in the lower chamber, and the electric heater is configured to heat the coolant in the tank body.

12. The liquid cooling device according to any one of claims 1 to 11, wherein the liquid cooling unit comprises a compressor, a first heat exchanger, an expansion valve, and a second heat exchanger that are sequentially connected, the first heat exchanger comprises a first refrigerant path and a first coolant path, and the second heat exchanger comprises a second refrigerant path; and
both the first refrigerant path and the second refrigerant path are connected between the compressor and the expansion valve, the first refrigerant path is used for heat exchange with the first coolant path, a liquid outlet of the first coolant path is connected to the first liquid inlet, and a liquid inlet of the first coolant path is connected to the first liquid outlet or the liquid inlet connector.

13. The liquid cooling device according to claim 12, wherein the liquid cooling unit further comprises two one-way valves and one pump;
an inlet of one of the one-way valves is connected to an outlet of the first refrigerant path, an outlet of the one of the one-way valves is connected to an inlet of the second refrigerant path, an inlet of the other of the one-way valves is connected to an outlet of the second refrigerant path, and an outlet of the other of the one-way valves is connected to an inlet of the first refrigerant path; and
an inlet of the pump is connected to the outlet of the second refrigerant path, and an outlet of the pump is connected to the inlet of the first refrigerant path.

14. The liquid cooling device according to claim 12, wherein the first heat exchanger and the second heat exchanger are arranged in the first direction, the tank body is located between the first heat exchanger and the second heat exchanger, a length of the tank body in the first direction is less than a length of the tank body in a second direction, and the second direction is perpendicular to the first direction; or
the first heat exchanger and the second heat exchanger are arranged in the first direction, the tank body and the liquid cooling unit are arranged in the second direction, and the length of the tank body in the first direction is greater than the length of the tank body in the second direction.

15. A charging device, wherein the charging device comprises a charging module, a charger, and the liquid cooling device according to any one of claims 1 to 14, and the charger is configured to output, to the electric vehicle, a current output by the charging module; and
the liquid cooling device is configured to: when the charging device charges the electric vehicle, perform heat exchange with the electric vehicle and at least one of the charging module or the charger.
